# FASCICULE DE BREVET EUROPEEN

(11) **EP 0 652 978 B1**
(45) Date de publication et mention de la délivrance du brevet: **17.12.1997**
(21) Numéro de dépôt: 93916033.9
(22) Date de dépôt: 23.07.1993
(51) Int. Cl.: C22B 7/00

(54) **NOUVEAU PROCEDE DE RECUPERATION DE METAUX, A PARTIR DE MATERIAUX CONTENANT DES METAUX REFRACTAIRES ET/OU DE TRANSITION**
VERFAHREN ZUR RUECKGEWINNUNG VON METALLEN AUS ABGENUTZTEN KATALYSATOREN
NOVEL METHOD FOR RECOVERING METALS FROM MATERIALS CONTAINING REFRACTORY AND/OR TRANSITION METALS

(30) Priorité: 28.07.1992 FR 9209308
(43) Date de publication de la demande: 17.05.1995
(73) Titulaire: COMMUNAUTE ECONOMIQUE EUROPEENNE (CEE), L-2920 Luxembourg (LU)
(72) Inventeur: GABALLAH, Ibrahim, F-54500 Vandoeuvre (FR); DJONA, Maurice, F-54000 Nancy (FR); MUGICA IRAOLA, Juan Carlos, E-20011 San Sebastian (ES); SOLOZABAL ECHEVARIA, Rodolfo, E-20007 San Sebastian (ES); DONATO, Mattio, B-1640 Bruxelles (BE); MEREGALLI, Letizia, I-1337 Venezia (IT); SENTIMENTI, Emilio, I-Treviso (IT)
(74) Mandataire: Grosset-Fournier, Chantal Catherine
(86) Numéro de dépôt international: FR9300755
(87) Numéro de publication internationale: WO9402653

(56) Documents cités:
- EP-A- 0 017 285
- GB-A- 2 214 173
- US-A- 3 180 706
- US-A- 4 216 118

## Description

La présente invention a pour objet la récupération de métaux à partir de matériaux contenant des métaux réfractaires et/ou de transition et notamment à partir de catalyseurs usés, notamment de catalyseurs de l'industrie alimentaire, chimique et pétrolière.

Ces industries utilisent des catalyseurs à base de métaux, tels que cobalt, fer, molybdène, nickel, titane, tungstène, etc. pour différents processus chimiques tel que les opérations d'hydroraffinage, oxydation de SO₂, réduction de NOₓ, etc.

Par exemple, l'hydrodésulfuration est réalisée, en mettant en contact du pétrole ou une fraction pétrolière avec un catalyseur de manière à éliminer le soufre à des températures de 300°C à 500°C et une pression de 40 à 80 kg/cm². Les catalyseurs utilisés à cet effet sont constitués généralement d'un support à base d'alumine ou silico-aluminates renfermant, comme constituants actifs, soit du molybdène et du cobalt, soit du molybdène et du nickel, soit du molybdène et du cobalt et du nickel présents sous forme d'oxydes dans les catalyseurs à l'état frais et sous forme de sulfures au cours de leur utilisation. Ces constituants actifs ont des teneurs variables et le plus souvent, elles sont de l'ordre de 10 - 15 % pour l'oxyde de molybdène MoO₃, de l'ordre de 4 - 5 % pour l'oxyde de cobalt CoO et/ou l'oxyde de nickel NiO.

Au cours de l'hydrodésulfuration, ils se déposent sur le catalyseur des matières carbonés. Ces dépôts diminuent l'activité du catalyseur et peuvent être éliminés lors de sa régénération. De plus, le catalyseur est contaminé peu à peu par des métaux contenus dans les fractions pétrolières à traiter ou par les matériaux des réacteurs. Ces métaux sont essentiellement le vanadium, le nickel, le fer, le phosphore, etc. Ils contribuent à la diminution de la porosité du catalyseur et réduisent progressivement son activité. Lorsque les cycles de régénération du catalyseur ne permettent plus une désulfuration efficace, le catalyseur est considéré comme un résidu et remplacé par un catalyseur frais.

Les industries alimentaire, chimique, pétrochimique, pétrolière, etc. génèrent également des catalyseurs usés contenant des éléments de valeur et/ou nocifs. Il est préférable de traiter ces catalyseurs usés afin de les dépolluer et pour recycler les métaux économiques.

Il est connu que l'on peut récupérer le molybdène ou le vanadium de matières les contenant, telles que minerais ou résidus de catalyseurs.

Il est connu que l'on peut récupérer le molybdène ou le vanadium de matières les contenant, telles que minerais ou résidus de catalyseurs, par des procédés hydro ou pyrométallurgiques. Un des procédés pyrométallurgiques est la chloruration soit par le chlore soit par l'acide chlorhydrique soit par des mélanges gazeux contenant du chlore de manière à former des chlorures et/ou oxychlorures de molybdène et de vanadium qui sont volatilisés à des températures supérieures à 200°C.

Ainsi, le brevet français n° 724.905 décrit un procédé d'extraction du mobybdène ou du tungstène ou du vanadium des matières qui en renferment par un traitement à 300 - 400°C par du chlore ou du gaz chlorhydrique. Les matières traitées sont utilisées mélangées à des substances carbonées. Ces substances carbonées peuvent être ajoutées à la matière première sous forme de coke, de lignite, de charbon de bois, etc. ou s'y trouver déjà au départ comme c'est le cas, par exemple, pour certains catalyseurs tels que ceux ayant servi à l'hydrogénation du charbon. Les chlorures métalliques volatils obtenus se laissent facilement décomposer par l'eau ou la vapeur d'eau. Dans ce procédé, les conditions sont telles que l'on peut employer des matières premières qui renferment, outre les métaux cités, d'autres métaux capables de former des chlorures volatils, par exemple du fer, de l'aluminium ou du zinc; aux basses températures utilisées, la volatilité du chlorure de zinc est très faible et la formation des chlorures de fer et d'aluminium, facilement volatils, n'a lieu que relativement lentement à partir des oxydes ou des sulfures renfermés dans les matières premières.

Dans le brevet américain n° 3.180.706, on décrit un procédé de récupération de métaux à partir de catalyseurs usés, notamment de catalyseurs d'hydrodésulfuration, par chloruration après une oxydation et une sulfuration préalables du catalyseur. La chloruration est effectuée en phase vapeur, à une température d'environ 290°C à 370°C à l'aide d'un agent de chloruration essentiellement anhydre constitué par du chlore ou, de préférence, par un mélange de chlore et d'un dérivé chloruré de carbone ou du soufre, comme le tétrachlorure de carbone. La chloruration a pour effet de volatiliser le molybdène sous forme de chlorure et de transformer le cobalt et le nickel en chlorures solubles. Les étapes préliminaires d'oxydation et de sulfuration visent à améliorer la séparation des métaux. Le traitement d'oxydation est effectué à environ 650°C - 1000°C au moyen d'un gaz contenant de l'oxygène, suffisamment longtemps pour permettre la transformation d'une partie importante du molybdène en sa valence la plus élevée. Au cours de cette oxydation, il se produit également une élimination par combustion du carbone contenu dans le catalyseur. Le traitement de sulfuration est effectué à environ 430°C - 480°C au moyen de vapeurs de soufre ou d'un sulfure volatil comme l'hydrogène sulfuré, le sulfure de carbone ou mercaptan. Après oxydation, sulfuration et chloruration, le molybdène est récupéré des vapeurs de chloruration soit en condensant par refroidissement du chlorure de molybdène sous forme de poudre, soit en le mettant en contact avec une solution aqueuse pour dissoudre les chlorures, en évitant une mise en solution des composés d'aluminium. Ce procédé a le désavantage de nécessiter plusieurs traitements successifs du catalyseur, dont notamment un traitement d'oxydation au cours duquel, il se produit des réactions chimiques conduisant à la formation des composés comme les molybdates et les aluminates de cobalt ou du nickel. Ceci diminue les taux de récupération de ces métaux.

Le brevet européen n° 0 017 285 décrit un autre procédé de récupération de Mo, V, Al, Co et Ni, à partir de résidus de catalyseurs d'hydrodésulfuration. Ce procédé comprend un lavage préalable des catalyseurs usés par de l'éther de pétrole afin d'en éliminer les hydrocarbures, suivi d'une chloruration par un mélange gazeux comprenant du chlore, de l'acide chlorhydrique et de la vapeur d'eau entre 200°C et 400°C. La teneur en vapeur d'eau est inférieure ou égale à 15 % en volume. Dans ces conditions, le molybdène et le vanadium sont volatilisés sous forme d'oxychlorure et l'aluminium sous forme de chlorure. Ces produits sont absorbés au moyen d'un milieu aqueux renfermant de l'acide chlorhydrique. Le chlorure d'aluminium est précipité sous forme de AlCl₃ 6H₂0 et séparé de la solution contenant les composés de molybdène et de vanadium. Le résidu de chloruration est lixivié à l'eau pour obtenir une solution contenant les chlorures de cobalt et du nickel.

Le brevet américain n° 4,216,118 décrit un procédé de récupération sélective du vanadium et éventuellement du nickel à partir des catalyseurs usés d'hydrodésulfuration, d'hydrodémétallisation etc. Le vanadium et le nickel sont sous forme de sulfures. Dans ce procédé, le catalyseur à traiter est, si nécessaire préalablement lavé à une température de 100 à 150°C par un mélange tétrachlorure de carbone - kérosène ou benzène - kérosène, pour éliminer les huiles et autres hydrocarbures légers qui peuvent s'y trouver, puis chloruré entre la température ambiante et 600°C par un agent chlorurant comme le chlore gazeux, ou le chlore gazeux additionné de tétrachlorure de carbone. L'élimination préalable des huiles et autres hydrocarbures légers du catalyseur usé à traiter a pour but d'éviter la formation de gaz chlorhydrique lors de la chloruration. Un gaz inerte comme l'azote est ajouté selon le cas au mélange chlorurant. Il faut noter que dans certains cas, il y a non seulement un premier prétraitement à l'aide d'un mélange benzène-kérosène mais également un deuxième prétraitement à l'aide d'azote (cf. exemples 4 et 5 du brevet US n° 4 216 118). Le vanadium est extrait du catalyseur sous forme de tétrachlorure gazeux, et le nickel est récupéré sous forme de chlorure par lixiviation du résidu de chloruration. La chloruration est effectuée dans des conditions telles que l'on obtient la formation du tétrachlorure de vanadium, en évitant celle de l'oxychlorure de vanadium. L'oxygène contenu dans l'oxychlorure étant nuisible pour la production ultérieure du vanadium métal à partir du trichlorure de vanadium. Si les éléments comme l'aluminium, le molybdène, le fer etc. sont présents dans le catalyseur, ils sont partiellement chlorurés et volatilisés avec le vanadium. Le gaz issu de la chloruration est liquéfié aux environs de 30 à 50 °C, puis chauffé aux environs de 150 à 200 °C pour décomposer le tétrachlorure de vanadium en trichlorure de vanadium solide mélangé avec les chlorures d'aluminium, de molybdène, de fer etc. Ce dernier mélange est chauffé aux environs de 300 à 400°C pour éliminer MoCl₅, AlCl₃, FeCl₃, etc. sous forme de gaz, laissant VCl₃ solide qui peut alors être traité pour obtenir du vanadium métallique.

L'un des inconvénients de ce procédé réside dans le lavage préalable des catalyseurs pour éliminer les huiles et autres hydrocarbures légers. Un autre inconvénient est la nécessité d'avoir un système ayant une pression d'oxygène très faible afin d'éviter la formation d'oxychlorure de vanadium. Ceci exige en effet de réaliser la réaction de chloruration à basse température (inférieure ou égale à 200°C) pour éviter de chlorurer le support du catalyseur, par exemple l'alumine. Mais à une température de chloruration aussi basse, les rendements d'extraction du vanadium et du nickel sont faibles. D'autre part, l'augmentation de la température de chloruration à 300°C ou plus favorise la chloruration de l'aluminium, du molybdène, du fer etc., dont les chlorures sont volatilisés puis condensés avec ceux du vanadium, rendant difficile l'étape ultérieure de séparation des chlorures de vanadium.

Les méthodes proposées jusqu'ici pour récupérer par chloruration le molybdène, le vanadium, le cobalt et le nickel, avec éventuellement l'aluminium, à partir de résidus de catalyseurs d'hydrodésulfuration font appel à des traitements préalables soit par des solvants comme l'éther de pétrole, le benzène, ou le kérosène pour dissoudre les hydrocarbures soit par oxydation suivie par une sulfuration. D'autre part, la chloruration de l'alumine complique les étapes suivantes de séparation des composés des éléments volatilisés et augmente la consommation des agents chlorurants. Par ailleurs, la formation de chlorure d'aluminium favorise la synthèse des complexes gazeux de chlorures binaires conduisant à l'augmentation de la tension de vapeur de chlorures de cobalt. Ceci se traduit par un transfert de chlorure de cobalt dans les condensats et complique la séparation des cations (Mo, V, etc.). Enfin, le chlorure d'aluminium se retrouvant en partie dans le résidu, nuit à la filtration des solutions contenant des chlorures de Co et/ou de Ni.

La présente invention a pour objet un procédé de récupération de métaux à partir de matériaux contenant des métaux réfractaires et/ou de transition, notamment à partir de catalyseurs usés sans traitement préalable, mettant à profit la présence d'impuretés telles que le carbone, le soufre ou les hydrocarbures utilisés comme combustible interne.

La présente invention a pour objet un procédé de récupération de métaux à partir de résidus de matériaux contenant des métaux réfractaires et/ou de transition, notamment à partir de catalyseurs usés, simplifié par rapport aux procédés existants.

La présente invention a pour objet un procédé de dépollution des matériaux contenant des métaux réfractaires et/ou de transition, notamment à partir de catalyseurs usés par chloruration ou carbochloruration.

La présente invention a pour objet un procédé permettant la récupération de chacun des métaux contenus dans un ensemble de métaux, à partir de matériaux contenant des métaux réfractaires et/ou de transition, notamment à partir de catalyseurs usés.

La présente invention a pour objet un procédé de récupération de métaux à partir de matériaux contenant des métaux réfractaires et/ou de transition, notamment à partir de catalyseurs usés, dans lequel la chloruration de l'aluminium est très faible.

Plus précisement l'invention a pour objet un procédé de récupération respectivement de chacun des métaux contenus dans l'un des ensembles suivants:

W - Ti,

Ni - Mo,

Co - Mo,

Co - W,

Ni - W,

V - Fe,

V - Ni,

Co - Ni - Mo,

Co - Ni - W,

Co - Ni - W - V,

ou

Co - Ni - Mo - V,

à partir de tout matériau contenant des métaux réfractaires et/ou de transition et notamment à partir de catalyseurs usés contenant ces susdits ensembles, ces matériaux, notamment ces catalyseurs pouvant contenir de l'humidité, et des impuretés telles que des hydrocarbures, du soufre, du charbon, la quantité de charbon et de soufre ne dépassant pas environ 35 % en poids, et le soufre étant notamment en quantité inférieure ou égale à environ 15 % en poids et le charbon étant notamment en quantité inférieure ou égale à environ 20 % en poids, et ces catalyseurs contenant également notamment de 0 % à environ 35 % (en poids) de matières réductrices, caractérisé en ce que:
- l'on n'effectue pas de traitement pour éliminer la vapeur d'eau éventuellement présente ainsi que les impuretés éventuellement présentes,
- et en ce que l'on effectue la chloruration sélective des susdits matériaux, notamment des catalyseurs usés, à l'aide d'un mélange gazeux choisi parmi les mélanges suivants:

   chlore - air,

   chlore - gaz inerte,

   chlore - gaz inerte + gaz réducteur,

   chlore - gaz inerte + air
cette chloruration ayant lieu à une température d'environ 250 à environ 650°C, à une pression totale d'environ 10 kPa à environ 300 kPa (0,1 à 3 bars) et conduisant d'une part à la volatilisation de certains des métaux sous forme de chlorures et/ou oxychlorures lesquels forment le condensat et d'autre part à l'obtention d'un résidu de matériaux, notamment de catalyseurs contenant des chlorures de métaux non volatilisés, chaque métal étant récupéré,
* soit à partir de son chlorure et/ou de son oxychlorure volatilisé et condensé sélectivement,
* soit sous forme de son chlorure en solution, à partir du résidu de chloruration de catalyseur, lequel a été soumis à une lixiviation, en vue de solubiliser les chlorures et/ou oxychlorures des métaux contenus dans ce résidu.

Ce sont les impuretés, notamment le carbone et le soufre qui jouent le rôle de source énergétique et de matières réductrices.

Dans le procédé de l'invention, les matériaux, notamment les catalyseurs usés sont chlorurés sans traitement thermique ou chimique préalable et sans traitement préalable avec un solvant.

Les conditions de mise en oeuvre du procédé selon la valeur du rapport (C + S)/(Somme de Co, Ni, V, Ti, W, Mo, Fe) sont définies dans les revendications 1 à 4 du présent brevet.

Les catalyseurs usés avantageusement traités par le procédé de l'invention sont des catalyseurs usés de l'industrie alimentaire, chimique et pétrolière. Ces catalyseurs sont à base de l'un ou plusieurs composés des éléments suivants: Co, Ni, Mo, W, V comme phases actives, et supportés par l'un des composés suivants: dioxyde de titane, alumine, silico-aluminates, silice, etc. Ces catalyseurs usés peuvent au cours de leur utilisation accumuler d'autres composés des éléments tels que Al, C, Cr, Cu, Fe, Ni, P, Pb, S, Si, V, etc. Comme exemples de ces catalyseurs, on peut citer ceux de l'hydroraffinage (hydrogénation, hydrodésulfuration, hydrodéazotation) contenant Co et/ou Ni et Mo et/ou W, de polymérisation à base de Ni supporté, de réduction de NOₓ, ayant des composés de W supporté par TiO₂, d'oxydation de SO₂ à base d'oxyde de vanadium, etc., qui sont avantageusement traités par le procédé de l'invention.

De façon générale, la chloruration dure environ 15 mn à environ 2 h et est avantageusement inférieure à 1 heure.

La chloruration conduit à la volatilisation de certains des métaux, sous forme de leurs chlorures et/ou oxychlorures, lesquels peuvent être condensés sélectivement par refroidissement à l'aide de condenseurs soumis à un gradient de température prédéfini ou bien peuvent être récupérés tels quels et purifiés par distillation. Après la chloruration, on obtient également un résidu de matériau, notamment de catalyseur, qui contient des métaux sous forme de chlorures et/ou d'oxychlorures, lesquels peuvent être solubilisés dans l'eau ou notamment dans une solution acidifiée ayant un pH de 4 à 6,5.

Dans l'invention, les métaux à récupérer sont sous forme d'oxydes et/ou de sulfures

Le procédé de l'invention s'applique aux matériaux, notamment aux catalyseurs usés ne contenant pas plus d'environ 35 % en poids de charbon et de soufre, car une teneur supérieure pourrait avoir comme conséquence des risques d'incendie.

Lorsque le procédé de l'invention vise la récupération de vanadium, (dans le mélange V-Ni, V-Fe, Co-Ni-W-V ou Co-Ni-Mo-V), le vanadium peut être présent à n'importe quelle teneur, même à des teneurs inférieures à environ 2 % en poids.

Le procédé de l'invention permet de récupérer non seulement les métaux présents dans des matériaux, notamment dans des catalyseurs usés, mais également les métaux susceptibles d'avoir été déposés sur les matériaux, notamment sur les catalyseurs en question, lors de leur utilisation.

Le procédé de l'invention permet également de récupérer les métaux à partir de déchets de l'industrie de métaux non ferreux, notamment dans le domaine chimique et métallurgique.

Selon un mode de réalisation avantageux de l'invention:
- dans le mélange chlore-air, le rapport volumique chlore/air est de 0,1 à 2, avantageusement de 0,15 à 1,
- dans le mélange chlore-gaz inerte, le rapport chlore/gaz inerte est de 0,05 à 2, avantageusement de 0,1 à 1,
- dans le mélange chlore-gaz inerte + gaz réducteur, le rapport volumique chlore/gaz inerte + gaz réducteur est de 0,1 à 3, avantageusement de 0,15 à 2,
- dans le mélange chlore - gaz inerte + air, le rapport chlore/gaz inerte + air est de 0,1 à 2, avantageusement de 0,15 à 1.

On utilise le mélange Cl₂-air lorsque le matériau, notamment le catalyseur contient du soufre et du carbone en quantité telle que le rapport molaire (C + S)/(somme Co, Ni, V, Ti, W, Mo, Fe) est compris entre 2 et 4, avantageusement entre 2,5 et 3,5.

On utilise le mélange Cl₂-gaz inerte lorsque le matériau, notamment le catalyseur contient du soufre et du carbone en quantité telle que le rapport molaire (C + S)/(somme Co, Ni, V, Ti, W, Mo, Fe) est supérieur à 1,2 et inférieur à 2.

On utilise le mélange Cl2-gaz inerte-air, lorsque le rapport molaire (C + S)/(somme de Co, Ni, V, Ti, W, Mo, Fe) est supérieur à environ 4.

Dans le procédé de l'invention lorsque les matériaux, notamment les catalyseurs usés à traiter contiennent du soufre et du carbone en quantité telle que le rapport molaire (C + S)/(somme de Co, Ni, V, Ti, W, Mo, Fe) est inférieur à environ 1,2,
- soit on additionne avant la chloruration, des matières réductrices, notamment des matières carbonifères comme le charbon de bois, le charbon, le lignite, le coke moulé, le coke, etc. et avantageusement le charbon,
- soit on utilise comme agent chlorurant un mélange chlore-gaz inerte + gaz réducteur, le gaz réducteur étant avantageusement CO, le rapport volumique chlore/(gaz inerte + gaz réducteur) étant avantageusement de 0,1 à 3, et le rapport volumique entre le gaz inerte et le gaz réducteur étant avantageusement de 10 à 0,5.

Comme matières réductrices ajoutées avant la chloruration, on peut avantageusement utiliser le charbon de bois, le charbon, le lignite, le coke moulé, le coke, etc.

La quantité de matières réductrices à ajouter est telle que le rapport molaire (matières réductrices)/ (somme de Co, Ni, V, Ti, W, Mo, Fe) soit au moins supérieur ou égal à environ 1,5.

Lorsque les matériaux, notamment les catalyseurs usés à traiter contiennent du soufre et du carbone en quantité telle que le rapport molaire (C + S)/(somme de Co, Ni, V, Ti, W, Mo, Fe) est inférieur à environ 1,2, on a avantageusement recours à l'utilisation d'un mélange chlore-gaz inerte + gaz réducteur comme agent chlorurant.

Dans le procédé de l'invention, lorsque les matériaux, notamment les catalyseurs usés à traiter contiennent du soufre et du carbone en quantité telle que le rapport molaire (C + S)/(somme de Co, Ni, V, Ti, W, Mo, Fe) est supérieur à environ 1,5, ou à environ 1,2, le mélange de chloruration est choisi parmi les mélanges chlore-air ou chlore-gaz inerte respectivement.

Les matériaux, notamment les catalyseurs usés peuvent également contenir de l'humidité, généralement à raison de 0 à environ 12%, et notamment à raison d'environ 1 à environ 8%. La présence de la vapeur d'eau ne perturbe pas la chloruration.

Dans le procédé de l'invention, le gaz inerte est notamment de l'azote, de l'helium ou de l'argon, et avantageusement de l'azote.

Dans le procédé de l'invention, lorsque les supports des catalyseurs sont tels que Al2O3, SiO2 ou silico-aluminate, ils réagissent avec le mélange chlorurant de façon suffisamment faible pour que la quantité respective de silice ou d'alumine transformée en chlorures soit inférieure à environ 5 % de la silice et à environ 15 % de l'alumine contenues dans les catalyseurs.

La chloruration du support est faible ce qui représente des avantages importants pour le procédé de l'invention: à savoir de minimiser la consommation de l'agent chlorurant, de limiter la formation des complexes de chlorures binaires gazeux entraînant une baisse de taux de récupération de Co et/ou Ni et d'éviter des problèmes au cours de la filtration après la solubilisation des chlorures de Ni et/ou Co à partir du résidu de chloruration.

Dans le procédé de l'invention, la pression de chloruration est de 10 kPa à 300 kPa.

Les conditions du procédé de l'invention sont telles que la pression partielle de l'oxygène est suffisamment importante pour que la chloruration de la silice et/ou l'alumine des catalyseurs soit la plus faible possible.

Pour fixer les idées et à titre d'exemple, la pression partielle en oxygène est supérieure à environ 2 10-⁷ kPa, pour une température de chloruration de 500°C.

Dans le procédé de l'invention, trois paramètres sont à prendre en considération, la pression en chlore, la pression en oxygène dans le mélange chlorurant et la température. La pression partielle de chlore doit être suffisamment grande pour permettre une chloruration rapide des métaux de valeurs. La pression partielle d'oxygène doit être assez importante pour limiter la chloruration de la silice et/ou de l'alumine des catalyseurs, mais suffisamment basse pour permettre la chloruration de Co, Ni, Mo, W, V ou Ti. La température de chloruration doit être assez importante pour chlorurer les composés de ces métaux, et volatiliser les chlorures et/ou oxychlorures de Mo, W, V, et Ti, mais sans volatiliser les chlorures de Ni et/ou Co.

Selon la nature des métaux, le procédé de l'invention permet de récupérer au moins environ 60 % et avantageusement de 70 à 99 % de chacun des métaux contenus dans les matériaux, notamment les catalyseurs usés.

Selon un mode de réalisation avantageux de l'invention, on effectue la chloruration à l'aide d'un mélange:
- chlore - air,
- chlore - gaz inerte + air,
- chlore - gaz inerte + gaz réducteur.

En effet, ces trois mélanges permettent en pratique de traiter n'importe quel catalyseur usé contenant des composés de métaux réfractaires et/ou de transition.

Selon un mode de réalisation avantageux, le procédé de l'invention concerne la récupération respectivement de V et Ni, à partir d'un matériau, notamment d'un catalyseur usé contenant V et Ni, caractérisé en ce que la chloruration a lieu à l'aide d'un mélange de chloruration défini ci-dessus, à une température allant de 250 à 650°C, de préférence de 350 à 550°C,
. V étant récupéré dans le condensat, sous forme de chlorure et/ou d'oxychlorure de V, à une température de -80 à 150°C, avantageusement de -40 à 20°C,
. Ni étant récupéré par lixiviation du résidu, sous forme de chlorure de Ni, à une température d'environ 20 à environ 100°C, avantageusement d'environ 30 à environ 80°C.

Les taux de récupération de V et de Ni varient avantageusement respectivement de 70% à 82 % et de 65 % à 98 %.

Selon un mode de réalisation avantageux, le procédé de l'invention concerne la récupération respectivement de W et Ti, à partir d'un matériau, notamment d'un catalyseur usé à base de W et supporté par TiO₂, caractérisé en ce que la chloruration a lieu à l'aide d'un mélange de chloruration défini ci-dessus, à une température allant de 250 à 650°C, de préférence de 350 à 550°C,
. W étant récupéré dans le condensat, sous forme de chlorure et/ou d'oxychlorure de W, à une température de 15 à 200°C, avantageusement de 50 à 150°C,
. Ti étant récupéré dans le condensat, sous forme de chlorure de Ti, à une température de -50 à 50°C, avantageusement de -40 à -20°C.

Les taux de récupération de W et de Ti sont respectivement de 93 à 100% et de 85 à 99%.

Selon un autre mode de réalisation avantageux, le procédé de l'invention concerne la récupération respectivement de Ni et Mo, à partir d'un matériau, notamment d'un catalyseur usé à base de Ni et Mo, caractérisé en ce que la chloruration a lieu à l'aide d'un mélange de chloruration défini ci-dessus, à une température allant de 250 à 650°C, de préférence de 400 à 550°C,
. Mo étant récupéré dans le condensat, sous forme de chlorure et/ou d'oxychlorure de Mo à une température de 20 à 200°C, de préférence de 50 à 150°C,
. Ni étant récupéré par lixiviation du résidu de chloruration, sous forme de chlorure de Ni, à une température de 20 à 100°C, avantageusement de 30 à 80°C.

Les taux respectifs de récupération de Ni et de Mo sont de 65 % à 98% et de 82% à 99%.

Selon un autre mode de réalisation, le procédé de l'invention concerne la récupération respectivement de Co et Mo, à partir d'un matériau, notamment d'un catalyseur usé à base de Co et Mo, caractérisé en ce que la chloruration a lieu à l'aide d'un mélange de chloruration défini ci-dessus, à une température allant de 250 à 650°C, de préférence de 400 à 550°C,
. Mo étant récupéré dans le condensat, sous forme de chlorure et/ou d'oxychlorure de Mo à une température de 20 à 200°C, de préférence de 50 à 150°C,
. Co étant récupéré par lixiviation du résidu de chloruration, sous forme de chlorure de Co, à une température de 20 à 100°C, avantageusement de 30 à 80°C.

Les taux respectifs de récupération de Co et de Mo sont de 60% à 95 % et de 82% à 99%.

Selon un autre mode de réalisation, le procédé de l'invention concerne la récupération repectivement de Co et W, à partir d'un matériau, notamment d'un catalyseur usé à base de Co et W, caractérisé en ce que la chloruration a lieu à l'aide d'un mélange de chloruration défini ci-dessus, à une température allant de 250 à 650°C, de préférence de 350 à 550°C,
. W étant récupéré dans le condensat, sous forme de chlorure et/ou d'oxychlorure de W, à une température de 15 à 200°C, de préférence de 50 à 150°C,
. Co étant récupéré par lixiviation du résidu de chloruration, sous forme de chlorure de Co, à une température de 20 à 100°C, avantageusement de 30 à 80°C.

Les taux de récupération de Co et de W sont respectivement 60 à 95% et 80 à 99%.

Selon un autre mode de réalisation, le procédé de l'invention concerne la récupération du W et du Ni, à partir d'un matériau, notamment d'un catalyseur usé à base de W et de Ni, caractérisé en ce que la chloruration a lieu à l'aide d'un mélange de chloruration défini ci-dessus, à une température allant de 250 à 650, de préférence de 350 à 550°C,
. W étant récupéré dans le condensat, sous forme de chlorure et/ou d'oxychlorure de W à une température de 15 à 200°C, de préférence de 50 à 150°C,
. Ni étant récupéré par lixiviation du résidu de chloruration, sous forme de chlorure de Ni, à une température de 20 à 100°C, avantageusement de 30 à 80°C.

Les taux de récupération de Ni et de W sont respectivement 68 à 98% et 80 à 99%.

Selon un autre mode de réalisation, le procédé de l'invention concerne la récupération respectivement de V et Fe, à partir d'un matériau, notamment d'un catalyseur usé à base de V, caractérisé en ce que la chloruration à lieu à l'aide d'un mélange de chloruration défini ci-dessus, à une température allant de 250 à 650°C, de préférence de 350 à 550°C,
. V étant récupéré dans le condensat, sous forme de chlorure et/ou d'oxychlorure de V, à une température de -80 à 150°C, de préférence de -40 à 20°C,
. Fe étant récupéré, selon la composition du mélange gazeux, dans le résidu sous forme d'oxyde ou dans le condensat sous forme de chlorure et/ou d'oxychlorure de Fe, à une température de 20 à 200°C, de préférence de 50 à 150°C.

On récupère Fe dans le résidu avec les mélanges Cl₂-air ou Cl₂-N₂. On récupère Fe dans le condensat avec les mélanges Cl₂-CO-N₂.

Les taux de récupération de V et de Fe sont respectivement 80 à 99% et 5 à 99%.

Selon un autre mode de réalisation de l'invention, le procédé concerne la récupération respectivement de Co, Ni, et Mo, à partir d'un matériau, notamment d'un catalyseur usé à base de Co, Ni et Mo, caractérisé en ce que la chloruration a lieu à l'aide d'un mélange de chloruration défini ci-dessus, à une température allant de 250 à 650°C, de préférence de 400 à 550°C,
. Mo étant récupéré dans le condensat sous forme de chlorure et/ou d'oxychlorure de Mo à une température de 20 à 200°C, de préférence de 50 à 150°C,
. Co et Ni étant récupérés par lixiviation du résidu de chloruration, sous forme de chlorures de Co et de Ni, à une température de 20 à 100°C, avantageusement de 30 à 80°C. Les chlorures pouvant être séparés selon les techniques classiques telles que l'extraction par solvant, la précipitation, etc.

Les taux de récupération de Co, Ni et Mo sont respectivement d'environ 60% à environ 95%, d'environ 65% à environ 98 % et de 82% à 98%.

Selon un autre mode de réalisation, le procédé de l'invention concerne la récupération respectivement de Co, Ni, et W à partir d'un matériau, notamment d'un catalyseur usé à base de Co, Ni et W, caractérisé en ce que la chloruration a lieu à l'aide d'un mélange de chloruration défini ci-dessus, à une température allant de 250 à 650°C de préférence de 350 à 550°C,
. W étant récupéré dans le condensat sous forme de chlorure et/ou d'oxychlorure de W, à une température de 15 à 200°C, de préférence de 50 à 150°C,
. Co et Ni étant récupérés par lixiviation du résidu de chloruration sous forme de chlorures de Co et Ni, à une température de 20 à 100°C, avantageusement de 30 à 80°C, les chlorures étant ensuite séparés par des techniques classiques telles que décrites ci-dessus.

Les taux respectivement de récupération de Co, Ni et W sont de 60% à 95 %, de 65 % à 98% et de 80% à 99%.

Selon un autre mode de réalisation, le procédé de l'invention concerne la récupération de Co, Ni, W et V, à partir d'un matériau, notamment d'un catalyseur usé à base de Co, Ni et W, caractérisé en ce que la chloruration a lieu à l'aide d'un mélange de chloruration défini ci-dessus, à une température allant de 250 à 650°C, de préférence de 350 à 550°C,
. W étant récupéré dans le condensat sous forme de chlorure et/ou d'oxychlorure de W, à une temperature de 15 à 200°C, avantageusement de 50 à 150°C,
. V étant récupéré dans le condensat sous forme de chlorure et/ou d'oxychlorure de V à une température de -80 à 150°C, de préférence de -40 à 20°C,
. Co et Ni étant récupérés par lixiviation du résidu de chloruration, sous forme de chlorures de Co et Ni, à une température de 20 à 100°C, avantageusement de 30 à 80°C, les chlorures étant ensuite séparés par des techniques classiques telles que décrites ci-dessus.

Dans ce cas, les catalyseurs avant leur utilisation ne contiennent pas de composés de V. Mais le vanadium se retrouve dans les matériaux, notamment dans les catalyseurs usés car il provient des fractions pétrolières à traiter; c'est par exemple le cas de l'hydrodésulfuration d'hydrocarbures riches en V.

Les taux respectifs de récupération de V, W, Co et Ni sont de 70% à 82%, de 80% à 99%, de 60% à 95% et de 65 % à 98%.

Selon un autre mode de réalisation, le procédé de l'invention concerne la récupération de Co, Ni, Mo, et V, à partir d'un matériau, notamment d'un catalyseur usé à base de Co, Ni et Mo, caractérisé en ce que la chloruration a lieu à l'aide d'un mélange de chloruration défini ci-dessus, à une température allant de 250 à 650°C, de préférence de 400 à 550°C,
. Mo étant récupéré dans le condensat sous forme de chlorures et/ou d'oxychlorures de Mo, à une température de 20 à 200°C, de préférence de 50 à 150°C,
. V étant récupéré dans le condensat, sous forme de chlorure et/ou d'oxychlorure de V, à une température de -80 à 150°C, de préférence de -40 à 20°C,
. Co et Ni étant récupérés par lixiviation du résidu de chloruration, sous forme de chlorures de Co et de Ni, à une température de 20 à 100°C, avantageusement de 30 à 80°C, les chlorures étant ensuite séparés par des techniques classiques telles que décrites ci-dessus.

Comme dans le cas précédent, les catalyseurs avant leur utilisation ne contiennent pas de V, mais le V se retrouve dans les catalyseurs usés car il provient des matières dont le traitement implique l'utilisation des catalyseurs en question.

Les contenus en carbone et éventuellement en soufre sont utilisés en tant que source énergétique et comme réducteurs. Les catalyseurs usés pauvres en carbone et soufre sont chlorurés après un ajout de matières carbonées comme le charbon de bois, le charbon, le lignite, le coke moulé, le coke, etc. soit par un mélange gazeux de Cl₂-CO-gaz inerte. L'agent chlorurant peut être un mélange de chlore et air ou chlore et un gaz inerte. Les chlorures et/ou oxychlorures de molybdène et de vanadium sont volatilisés et condensés sélectivement. Ces composés peuvent être récupérés comme tels ou purifiés par distillation. Les taux de récupération de molybdène et de vanadium sont respectivement 82 à 99% et 70 à 82 %.

Le résidu de catalyseur, restant après le traitement de chloruration, renferme le cobalt et le nickel sous forme de chlorures solubles dans l'eau ou dans une solution acidifiée ayant un pH de 4 à 6,5. Ces métaux sont récupérés avec des rendements de l'ordre de 99 %. Le taux global de récupération est de 60 à 95 % pour le cobalt et 65 à 98 % pour le nickel.

Le procédé de l'invention est illustré à l'aide des figures suivantes:

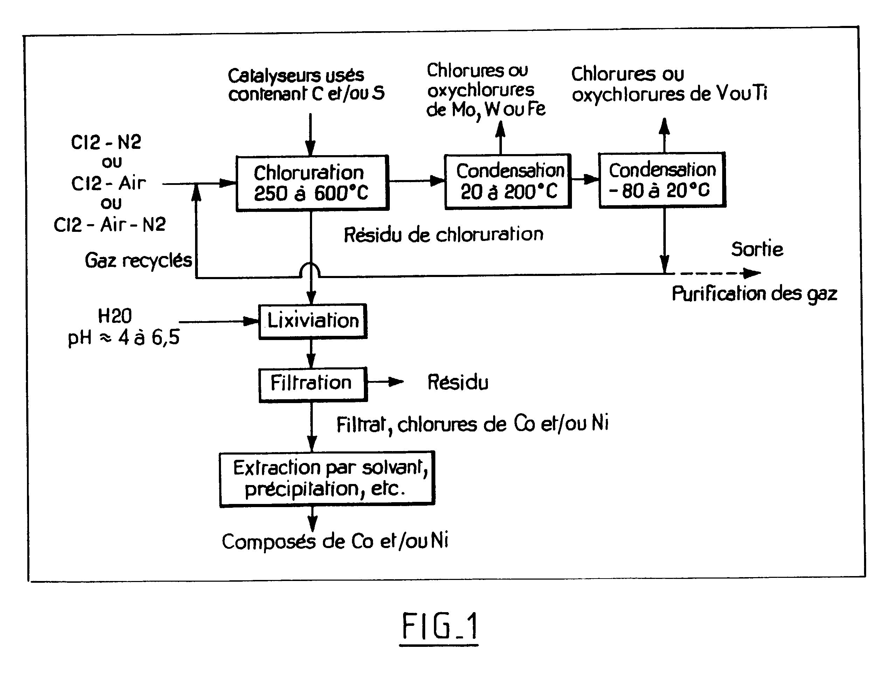

- figure 1: schéma du procédé lorsque les catalyseurs usés à traiter contiennent du C et du S dans un rapport molaire (C+S)/(Somme Co, Fe, Mo, Ni, Ti, V et W) compris entre 1,2 et 2, compris entre 2 et 4 ou supérieur à environ 4, pour les mélanges Cl₂-N₂, Cl₂-air, ou Cl₂-air-gaz inerte, respectivement,

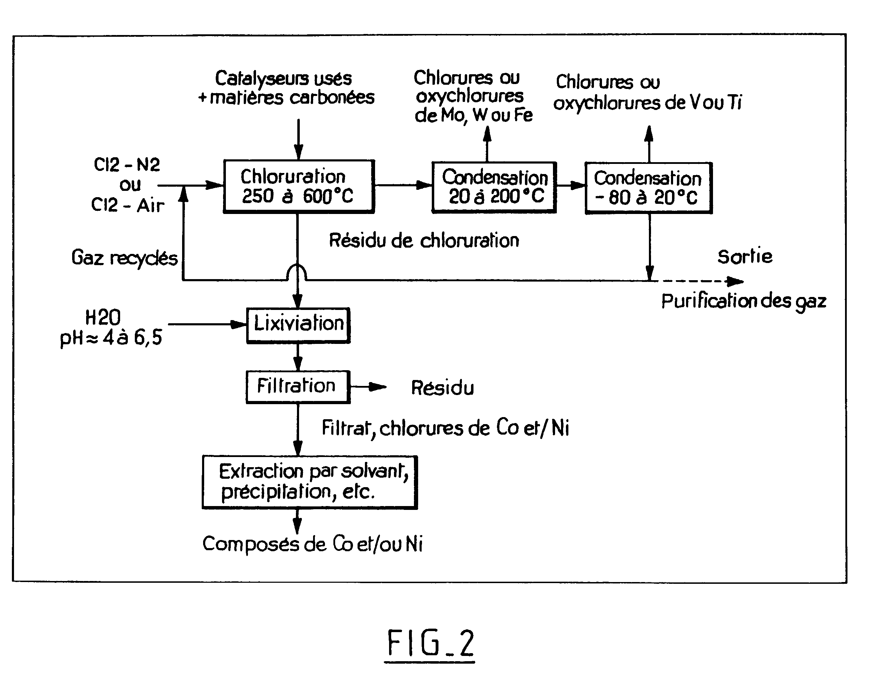

- figure 2: schéma du procédé lorsque la teneur totale en matières réductrices est telle que le rapport molaire (C+S)/(somme Co, Fe, Mo, Ni, Ti, V et W) est inférieur à environ 1,2. Dans ce cas on ajoute des matières carbonées en quantité telle que ce rapport soit compris entre 1,2 et 2 ou entre 2 et 4 pour les mélanges Cl₂-N₂ et Cl₂-air respectivement,

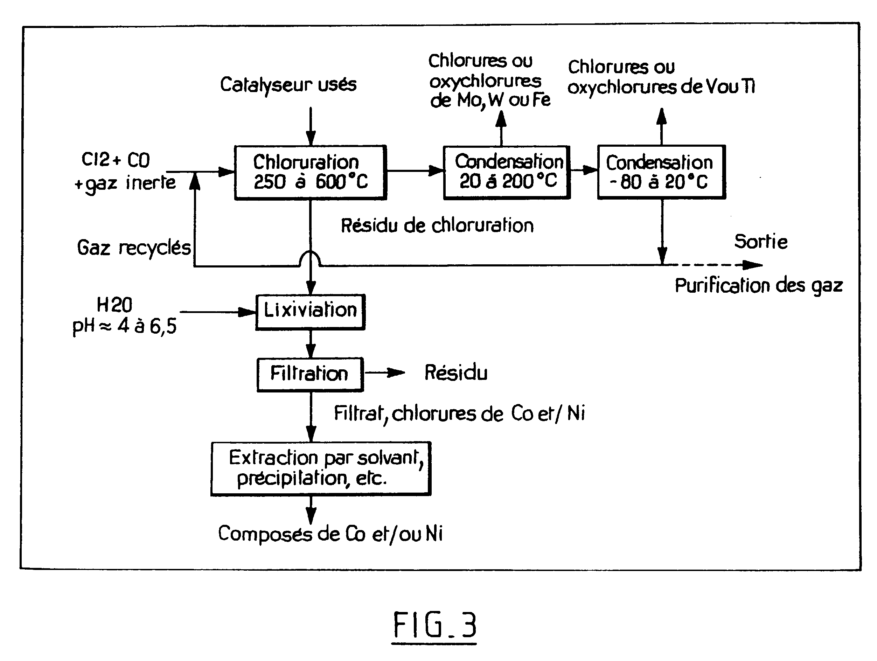

- figure 3: autre schéma du procédé lorsque la teneur totale en matières réductrices est telle que le rapport molaire (C+S)/(somme Co, Fe, Mo, Ni, Ti, V et W) est inférieur ou égal à 1,2 environ.

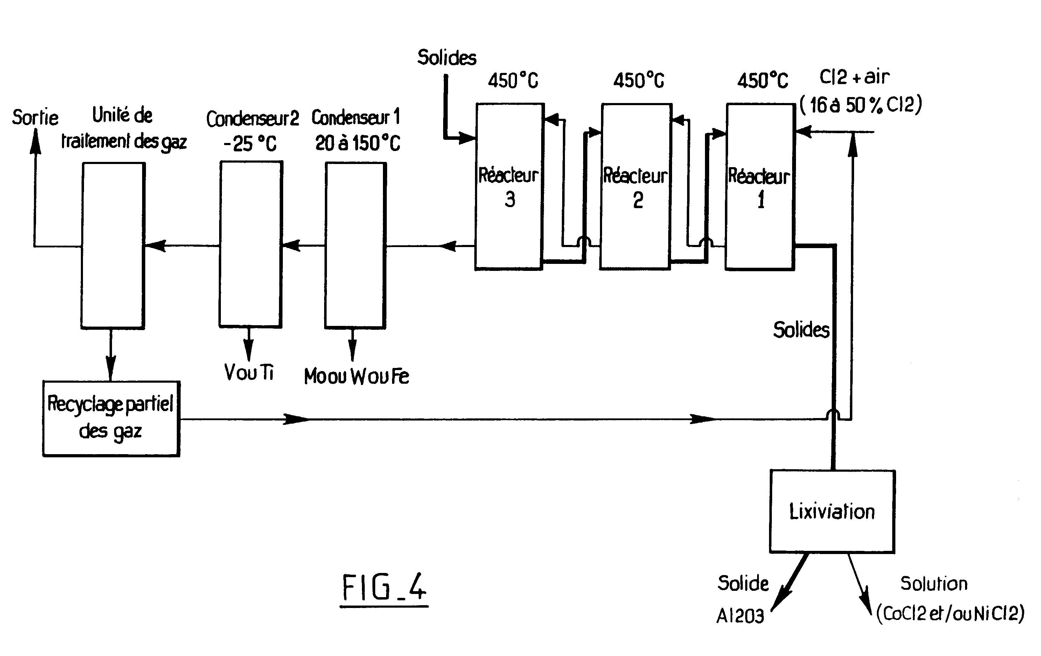

Un dispositif de mise en oeuvre de l'invention peut être constitué par celui représenté sur la figure 4 et qui peut être décrit de la façon suivante:

Trois réacteurs en séries dans lesquels les matériaux, notamment les catalyseurs (solides), et les mélanges gazeux de chloruration (ex.: Cl₂ + air) circulent à contre courant. La circulation à contre courant permet un meilleur transfert de masse et de chaleur entre les solides et les gaz.

A la sortie du troisième réacteur (Réacteur 3), les gaz sont refroidis dans un premier condenseur entre environ 20 et 150°C pour récupérer les composés chlorurés de Mo ou Fe ou W, selon la composition des matériaux ou des catalyseurs du départ.

A la sortie du premier condenseur (Condenseur 1), les gaz sont encore refroidis dans un second condenseur (Condenseur 2) à environ -25°C pour récupérer les composés chlorurés de V ou Ti, selon la composition des matériaux ou des catalyseurs de départ.

A la sortie du second condenseur (Condenseur 2), les gaz sont traités dans une unité de traitement des gaz, avant d'être évacués (Sortie), ou partiellement recyclés.

A la sortie du premier réacteur (Réacteur 1), les solides contenant les chlorures de cobalt et/ou nickel sont traités dans une unité de lixiviation, puis filtrés. Les chlorures de cobalt et/ou nickel sont récupérés dans la solution de lixiviation, et laissant un résidu final constitué essentiellement d'alumine.

Le procédé de l'invention est également illustré à l'aide des exemples qui suivent.

### EXEMPLE 1

Le catalyseur usé présentait l'analyse suivante :

| **Catalyseur à traiter** | |
|---|---|
| Vanadium | 5,0 % |
| Molybdène | 6,7 % |
| Aluminium | 19,6 % |
| Cobalt | 1,3 % |
| Nickel | 2,2 % |
| Carbone | 8,3 % |
| Soufre | 8,0 % |
| H₂O | 7,7 % |
| Soluble dans chloroforme et CS₂ | 2,50 % |

Un échantillon de ce catalyseur est chloruré à 500°C pendant 30 minutes avec un mélange de chlore et air ayant le rapport Cl₂/ Air = 1,4 ou le rapport Cl₂/ 0₂ = 7.

Les oxychlorures et/ou chlorures de molybdène et vanadium sont condensés sélectivement en deux condensats I et II.

Le premier condensat contient essentiellement des composés de molybdène contaminés par ceux de Al, Fe et V. Le deuxième est composé de majoritairement de vanadium avec des traces de Mo, Fe et S. La composition de ces deux condensats est la suivante :

| **Condensat I:** | |
|---|---|
| Vanadium | 1,5 % |
| Molybdène | 39,3 % |
| Aluminium | 4,5 % |
| Cobalt | 0,1 % |
| Nickel | 0,0 % |

| **Condensat II:** | |
|---|---|
| Vanadium | 10,8 % |
| Molybdène | 1,7 % |
| Aluminium | 0,9 % |
| Cobalt | 0,0 % |
| Nickel | 0,0 % |

La composition des résidus de chloruration et lixiviation est indiquée dans le tableau ci-dessous.

| **Analyse des résidus après chloruration et lixiviation des chlorures (Cl**_{**2**} **- Air)** | |
|---|---|
| Vanadium | 2,2 % |
| Molybdène | 0,2 % |
| Aluminium | 34,6 % |
| Cobalt | 0,2 % |
| Nickel | 0,1 % |

Les taux d'extraction sont résumés dans le tableau suivant.

| **Taux d'extraction** | |
|---|---|
| Vanadium | 77,9 % |
| Molybdène | 98,4 % |
| Aluminium | 10,1 % |
| Cobalt | 91,4 % |
| Nickel | 97,5 % |

### EXEMPLE 2

Un échantillon du même catalyseur traité dans l'exemple 1 est chloruré à 500°C pendant 30 minutes avec un mélange de chlore et air ayant le rapport Cl₂/Air = 0,2 ou le rapport Cl₂/O₂ = 1.

Les oxychlorures et/ou chlorures de molybdène et vanadium sont condensés sélectivement en deux condensats I et II. Le premier condensat contient essentiellement des composés de molybdène contaminés par ceux de Al, Fe et V. Le deuxième est composé majoritairement de vanadium. La composition de ces deux condensats est la suivante:

| **Condensat I:** | |
|---|---|
| Vanadium | 0,4 % |
| Molybdène | 51,1 % |
| Aluminium | 2,6 % |
| Cobalt | 0,0 % |
| Nickel | 0,1 % |

| **Condensat II:** | |
|---|---|
| Vanadium | 21,1 % |
| Molybdène | 2,8 % |
| Aluminium | 0,4 % |
| Cobalt | 0,0 % |
| Nickel | 0,0 % |

| **Analyse des résidus après chloruration et lixiviation des chlorures (Cl**_{**2**} **- Air)** | |
|---|---|
| Vanadium | 2,9 % |
| Molybdène | 0,3 % |
| Aluminium | 31,3 % |
| Cobalt | 0,2 % |
| Nickel | 0,2 % |

Les taux d'extraction sont résumés dans le tableau suivant.

| **Taux d'extraction** | |
|---|---|
| Vanadium | 70,5 % |
| Molybdène | 97,9 % |
| Aluminium | 8,6 % |
| Cobalt | 92,9 % |
| Nickel | 94,1 % |

### EXEMPLE 3

Un autre échantillon de même catalyseur est chloruré à 500 °C pendant 30 minutes avec un mélange gazeux de chlore et azote ayant un rapport Cl₂/N₂ égal à 1.

Après chloruration et lixiviation, les résidus ont la composition chimique indiquée dans le tableau suivant.

| **Analyse des résidus après chloruration et lixiviation des chlorures (Cl**_{**2**} **- N**_{**2**}**).** | |
|---|---|
| Vanadium | 1,9 % |
| Molybdène | 0,2 % |
| Aluminium | 32,1 % |
| Cobalt | 0,2 % |
| Nickel | 0,1 % |

Les taux d'extraction sont groupés dans le tableau suivant.

| **Taux d'extraction** | |
|---|---|
| Vanadium | 80,7 % |
| Molybdène | 98,5 % |
| Aluminium | 17,2 % |
| Cobalt | 92,2 % |
| Nickel | 97,8 % |

### EXEMPLE 4

Un autre échantillon de même catalyseur est chloruré à 450°C pendant 30 minutes avec un mélange gazeux de chlore, d'oxyde de carbone et d'azote ayant un rapport Cl₂/CO égal à 7.

Les oxychlorures et/ou chlorures de molybdène et vanadium sont condensés sélectivement en deux condensats I et II. Le premier condensat contient essentiellement des composés de molybdène contaminés par ceux de Al, Fe et V. Le deuxième est composé majoritairement de vanadium avec des traces de Mo, Fe et S. La composition de ces deux condensats est la suivante:

| **Condensat I:** | |
|---|---|
| Vanadium | 0,5 % |
| Molybdène | 38,4 % |
| Aluminium | 2,4 % |
| Cobalt | 0,0 % |
| Nickel | 0,0 % |

| **Condensat II:** | |
|---|---|
| Vanadium | 19,2 % |
| Molybdène | 0,8 % |
| Aluminium | 0,5 % |
| Cobalt | 0,0 % |
| Nickel | 0,0 % |

La composition des résidus de carbochloruration et lixiviation est indiquée dans le tableau ci-dessous.

| **Analyse des résidus après carbochloruration et lixiviation des chlorures (Cl**_{**2**}**-CO-N**_{**2**}**)** | |
|---|---|
| Vanadium | 2,4 % |
| Molybdène | 0,8 % |
| Aluminium | 30,6 % |
| Cobalt | 0,2 % |
| Nickel | 0,1 % |

| **Analyse des filtrats de lixiviation après séchage:** | |
|---|---|
| Vanadium | 0,0 % |
| Molybdène | 0,0 % |
| Aluminium | 4,9 % |
| Cobalt | 6,1 % |
| Nickel | 10,6 % |

Les taux d'extraction sont résumés dans le tableau suivant:

| **Taux d'extraction** | |
|---|---|
| Vanadium | 75,4 % |
| Molybdène | 93,6 % |
| Aluminium | 9,8 % |
| Cobalt | 90,7 % |
| Nickel | 96,8 % |

### EXEMPLE 5

Un autre catalyseur usé présentait l'analyse suivante:

| **Catalyseur à traiter** | |
|---|---|
| Vanadium | 7,1 % |
| Molybdène | 9,5 % |
| Aluminium | 27,9 % |
| Cobalt | 1,9 % |
| Nickel | 3,1 % |

Un échantillon de ce catalyseur est chloruré à 500°C pendant 30 minutes avec un mélange gazeux de chlore, d'oxyde de carbone et d'azote ayant un rapport Cl₂/CO égal à 3 et une teneur de 50 % d'azote.

Les oxychlorures et/ou chlorures de molybdène et vanadium sont condensés sélectivement en deux condensats I et II. Le premier condensat contient essentiellement des composés de molybdène contaminés par ceux de Al, Fe et V. Le deuxième est composé majoritairement de vanadium. La composition de ces deux condensats est la suivante:

| **Condensat I:** | |
|---|---|
| Vanadium | 0,3 % |
| Molybdène | 48,4 % |
| Aluminium | 2,7 % |
| Cobalt | 0,0 % |
| Nickel | 0,1 % |

| **Condensat II:** | |
|---|---|
| Vanadium | 35,1 % |
| Molybdène | 1,7 % |
| Aluminium | 1,1 % |
| Cobalt | 0,0 % |
| Nickel | 0,0 % |

| **Analyse des résidus après carbochloruration et lixiviation des chlorures (Cl**_{**2**}**-CO-N**_{**2**}**)** | |
|---|---|
| Vanadium | 4,7 % |
| Molybdène | 0,7 % |
| Aluminium | 33,4 % |
| Cobalt | 0,3 % |
| Nickel | 0,8 % |

| **Analyse des filtrats de lixiviation après séchage:** | |
|---|---|
| Vanadium | 0,0 % |
| Molybdène | 0,0 % |
| Aluminium | 2,8 % |
| Cobalt | 6,2 % |
| Nickel | 9,6 % |

Les taux d'extraction sont groupés dans le tableau suivant.

| **Taux d'extraction** | |
|---|---|
| Vanadium | 54,8 % |
| Molybdène | 94,1 % |
| Aluminium | 13,8 % |
| Cobalt | 86,3 % |
| Nickel | 80,6 % |

### EXEMPLE 6

Un autre catalyseur usé présentait l'analyse suivante:

| **Catalyseur à traiter** | |
|---|---|
| Vanadium | 0,1 % |
| Molybdène | 6,7 % |
| Aluminium | 26,6 % |
| Cobalt | 2,1 % |
| Nickel | 0,1 % |
| Carbone | 15,2 % |
| Soufre | 5,8 % |
| H₂O | 2,9 % |
| Soluble dans chloroforme et CS₂ | 13,3 % |

Un échantillon de ce catalyseur est chloruré à 500°C pendant 30 minutes avec un mélange gazeux de chlore et d'azote ayant un rapport Cl₂/N₂ égal à 1.

Les oxychlorures et/ou chlorures de molybdène sont condensés, donnant un condensat dont la composition est la suivante:

| **Condensat:** | |
|---|---|
| Molybdène | 10,8 % |
| Aluminium | 9,6 % |
| Cobalt | 0,4 % |

| **Analyse des résidus après chloruration et lixiviation des chlorures (Cl**_{**2**}**-N**_{**2**}**).** | |
|---|---|
| Molybdène | 3,3 % |
| Nickel | 28,1 % |
| Cobalt | 0,7 % |

Les taux d'extraction sont groupés dans le tableau suivant:

| **Taux d'extraction** | |
|---|---|
| Molybdène | 69,0 % |
| Aluminium | 32,8 % |
| Cobalt | 78,9 % |

### EXEMPLE 7

Un autre catalyseur usé présentait l'analyse suivante:

| **Catalyseur à traiter** | |
|---|---|
| Molybdène | 8,7 % |
| Aluminium | 24,1 % |
| Cobalt | 0,0 % |
| Nickel | 6,3 % |
| Silicium | 7,8 % |
| Carbone | 0,1 % |
| Soufre | 0,9 % |
| H₂O | 3,1 % |
| Soluble dans chloroforme et CS₂ | 1,0 % |

100 g de ce catalyseur sont mélangés avec 8,5 g du charbon. Ce mélange est chloruré à 500°C pendant 1 heure avec un mélange gazeux de chlore et d'air ayant un rapport Cl₂/O₂ égal à 1.

Les oxychlorures et/ou chlorures de molybdène sont condensés, donnant un condensat dont la composition est la suivante:

| **Condensat:** | |
|---|---|
| Molybdène | 19,5 % |
| Aluminium | 2,6 % |
| Nickel | 0,04 % |

| **Analyse des résidus après carbochloruration et lixiviation des chlorures (Cl**_{**2**} **- C - air).** | |
|---|---|
| Molybdène | 1,2 % |
| Aluminium | 31,8 % |
| Nickel | 1,8 % |

| **Analyse des filtrats de lixiviation, après séchage:** | |
|---|---|
| Molybdène | 0,03 % |
| Aluminium | 2,4 % |
| Nickel | 17,6 % |

Les taux d'extraction sont groupés dans le tableau suivant.

| **Taux d'extraction** | |
|---|---|
| Molybdène | 90,1 % |
| Aluminium | 2,9 % |
| Nickel | 78,8 % |
| Silicium | 5,5 % |

### EXEMPLE 8

Le même mélange catalyseur - charbon que celui utilisé dans l'exemple 7 est chloruré à 500°C pendant 1 heure avec un mélange gazeux de chlore et d'air ayant un rapport Cl₂/O₂ égal à 3.

Les oxychlorures et/ou chlorures de molybdène sont condensés, donnant un condensat dont la composition est la suivante:

| **Condensat:** | |
|---|---|
| Molybdène | 12,6 % |
| Aluminium | 6,2 % |
| Nickel | 0,03 % |

| **Analyse des résidus après carbochloruration et lixiviation des chlorures (Cl**_{**2**} **- C - air).** | |
|---|---|
| Molybdène | 0,8 % |
| Aluminium | 31,7 % |
| Nickel | 1,5 % |

| **Analyse des filtrats de lixiviation, après séchage:** | |
|---|---|
| Molybdène | 0,02 % |
| Aluminium | 6,2 % |
| Nickel | 30,6 % |

Les taux d'extraction sont groupés dans le tableau suivants.

| **Taux d'extraction** | |
|---|---|
| Molybdène | 93,7 % |
| Aluminium | 13,9 % |
| Nickel | 84,2 % |
| Silicium | 16,5 % |

### EXEMPLE 9

Un autre catalyseur usé présentait l'analyse suivante:

| **Catalyseur à traiter** | |
|---|---|
| Molybdène | 8,9 % |
| Aluminium | 29,1 % |
| Cobalt | 1,1 % |
| Nickel | 1,6 % |
| Carbone | 0,0 % |
| Soufre | 0,9 % |
| H₂O | 5,5 % |
| Soluble dans chloroforme et CS₂ | 0,1 % |

100 g de ce catalyseur sont mélangés avec 6,1 g du charbon. Ce mélange est chloruré à 500°C pendant 1 heure avec un mélange gazeux de chlore et d'air ayant un rapport Cl₂/O₂ égal à 3.

Les oxychlorures et/ou chlorures de molybdène sont condensés, donnant un condensat dont la composition est la suivante:

| **Condensat:** | |
|---|---|
| Molybdène | 15,8 % |
| Aluminium | 0,3 % |
| Cobalt | 0,1 % |
| Nickel | 0,04 % |

| **Analyse des résidus après carbochloruration et volatilisation des chlorures (Cl**_{**2**} **- C - air).** | |
|---|---|
| Molybdène | 1,4 % |
| Aluminium | 38,1 % |
| Colbat | 0,5 % |
| Nickel | 0,9 % |

| **Analyse des filtrats de lixiviation, après séchage:** | |
|---|---|
| Molybdène | 0,1 % |
| Aluminium | 3,5 % |
| Cobalt | 7,6 % |
| Nickel | 10,4 % |

Les taux d'extraction sont groupés dans le tableau suivant.

| **Taux d'extraction** | |
|---|---|
| Molybdène | 88,3 % |
| Aluminium | 1,6 % |
| Cobalt | 67,5 % |
| Nickel | 59,0 % |

### EXEMPLE 10

Un autre catalyseur usé présentait l'analyse suivante:

| **Catalyseur à traiter** | |
|---|---|
| Tungstène | 6,7 % |
| Titane | 37,0 % |
| Vanadium | 0,3 % |
| Silicium | 3,1 % |
| Aluminium | 0,9 % |
| Soufre | 1,3 % |
| H₂O | 3,9 % |

Un échantillon de ce catalyseur est chloruré à 350°C pendant 4 heures avec un mélange gazeux de chlore, d'oxyde de carbone et d'azote ayant un rapport Cl₂/CO égal à 1 et une teneur d'azote de 33,3 %.

| **Analyse des résidus après carbochloruration et volatilisation des chlorures (Cl**_{**2**} **- CO - N**_{**2**}**).** | |
|---|---|
| Tungstène | 2,0 % |
| Titane | 24,9 % |

Les taux d'extraction sont groupés dans le tableau suivant.

| **Taux d'extraction** | |
|---|---|
| Tungstène | 93 % |
| Titane | 84 % |

### EXEMPLE 11

Un autre échantillon du même catalyseur que celui de l'exemple 10 est chloruré à 350°C pendant 12 heures avec un mélange gazeux de chlore, d'oxyde de carbone et d'azote ayant un rapport Cl₂/CO égal à 1 et une teneur d'azote de 33,3 %.

| **Analyse des résidus après carbochloruration et volatilisation des chlorures (Cl**_{**2**} **- CO - N**_{**2**}**)** | |
|---|---|
| Tungstène | 0,23 % |
| Titane | 0,03 % |

Les taux d'extraction sont groupés dans le tableau suivant.

| **Taux d'extraction** | |
|---|---|
| Tungstène | 99,9 % |
| Titane | 99,9 % |

### EXEMPLE 12

Un autre catalyseur usé présentait l'analyse suivante:

| **Catalyseur à traiter** | |
|---|---|
| Vanadium | 2,0 % |
| Fer | 2,2 % |
| Aluminium | 1,6 % |
| Silicium | 23,4 % |
| Potassium | 2,6 % |
| H₂O | 1,2 % |

Un échantillon de ce catalyseur est chloruré à 500°C pendant 4 heures avec un mélange gazeux de chlore, d'oxyde de carbone et d'azote ayant un rapport Cl₂/CO égal à 1 et une teneur d'azote de 33,3 %.

| **Analyse des résidus après carbochloruration et volatilisation des chlorures (Cl**_{**2**} **- CO - N**_{**2**}**)** | |
|---|---|
| Vanadium | 0,04 % |
| Fer | 2,1 % |

Les taux d'extraction sont groupés dans le tableau suivant.

| **Taux d'extraction** | |
|---|---|
| Vanadium | 98,4 % |
| Fer | 17,5 % |

## Revendications

1. Procédé de récupération respectivement de chacun des métaux contenus dans l'un des ensembles suivants:
W - Ti,
Ni - Mo,
Co - Mo,
Co - W,
Ni - W,
V - Fe,
V - Ni,
Co - Ni - Mo,
Co - Ni - W,
Co - Ni - W - V,
ou
Co - Ni - Mo - V,
à partir de matériaux contenant des métaux réfractaires et/ou de transition et notamment à partir de catalyseurs usés contenant ces susdits ensembles, ces matériaux, notamment ces catalyseurs pouvant contenir de l'humidité, et des impuretés telles que des hydrocarbures, du soufre, du charbon, la quantité de charbon et de soufre ne dépassant pas 35 % en poids, et le soufre étant notamment en quantité inférieure ou égale à 15 % en poids et le charbon étant notamment en quantité inférieure ou égale à 20 % en poids, et ces catalyseurs contenant également notamment de 0% à 35% (en poids) de matières réductrices, les catalyseurs à traiter contenant du soufre et du carbone en quantité telle que le rapport molaire (C + S)/(somme de Co, Ni, V, Ti, W, Mo, Fe) est compris entre 2 et 4, ou les catalyseurs usés à traiter contenant du soufre et du carbone en quantité telle que le rapport molaire (C + S)/(somme Co, Ni, V, Ti, Mo, Fe, W) est inférieur à environ 1,2, caractérisé en ce que:
- l'on n'effectue pas de traitement pour éliminer la vapeur d'eau éventuellement présente ainsi que les impuretés éventuellement présentes, et
- en ce que l'on effectue la chloruration des susdits matériaux, notamment des catalyseurs usés, à l'aide de :
chlore - air,
et dans le cas où les catalyseurs usés à traiter contiennent du soufre et du carbone en quantité telle que le rapport molaire (C + S)/(somme Co, Ni, V, Ti, Mo, Fe, W) est inférieur à environ 1,2, on additionne avant la chloruration des matières réductrices, notamment des matières carbonifères comme le charbon de bois, le charbon, le lignite, le coke moulé, le coke, etc. et avantageusement le charbon, la quantité de matières réductrices à ajouter avant la chloruration étant telle que le rapport molaire (matières réductrices)/(somme de Co, Ni, V, Ti, W, Mo, Fe) soit au moins supérieur ou égal à environ 1,5,
cette chloruration ayant lieu à une température de 250 à 600°C et à une pression totale de 10 kPa à 300 kPa (0,1 à 3 bars), et conduisant d'une part à la volatilisation de certains des métaux sous forme de chlorure et/ou oxychlorures lesquels forment le condensat et d'autre part à l'obtention d'un résidu de matériaux, notamment de catalyseurs contenant des chlorures de métaux non volatilisés,
les supports des catalyseurs réagissant avec le mélange chlorurant de façon suffisamment faible pour que la quantité respective de silice ou d'alumine transformée en chlorures soit inférieure à environ 5% de la silice et à environ 15% de l'alumine contenues dans les catalyseurs,
chaque métal étant récupéré,
* soit à partir de son chlorure et/ou de son oxychlorure volatilisé et condensé sélectivement,
* soit sous forme de son chlorure en solution, à partir du résidu de chloruration de catalyseur, lequel a été soumis à une lixiviation, en vue de solubiliser les chlorures et/ou oxychlorures des métaux contenus dans ce résidu.

2. Procédé de récupération respectivement de chacun des métaux contenus dans l'un des ensembles suivants:
W - Ti,
Ni - Mo,
Co - Mo,
Co - W,
Ni - W,
V - Fe,
V - Ni,
Co - Ni - Mo,
Co - Ni - W,
Co - Ni - W - V,
ou
Co - Ni - Mo - V,
à partir de matériaux contenant des métaux réfractaires et/ou de transition et notamment à partir de catalyseurs usés contenant ces susdits ensembles, ces matériaux, notamment ces catalyseurs pouvant contenir de l'humidité, et des impuretés telles que des hydrocarbures, du soufre, du charbon, la quantité de charbon et de soufre ne dépassant pas 35 % en poids, et le soufre étant notamment en quantité inférieure ou égale à 15 % en poids et le charbon étant notamment en quantité inférieure ou égale à 20 % en poids, et ces catalyseurs contenant également notamment de 0% à 35% (en poids) de matières réductrices, les catalyseurs à traiter contenant du soufre et du carbone en quantité telle que le rapport molaire (C + S)/(somme de Co, Ni, V, Ti, W, Mo, Fe) est supérieur à 1,2 et inférieur à 2 , caractérisé en ce que:
- l'on n'effectue pas de traitement pour éliminer la vapeur d'eau éventuellement présente ainsi que les impuretés éventuellement présentes, et
- en ce que l'on effectue la chloruration des susdits matériaux, notamment des catalyseurs usés, à l'aide de :
chlore - gaz-inerte,
cette chloruration ayant lieu à une température de 250 à 600°C et à une pression totale de 10 kPa à 300 kPa (0,1 à 3 bars), et conduisant d'une part à la volatilisation de certains des métaux sous forme de chlorure et/ou oxychlorures lesquels forment le condensat et d'autre part à l'obtention d'un résidu de matériaux, notamment de catalyseurs contenant des chlorures de métaux non volatilisés,
les supports des catalyseurs réagissant avec le mélange chlorurant de façon suffisamment faible pour que la quantité respective de silice ou d'alumine transformée en chlorures soit inférieure à environ 5% de la silice et à environ 15% de l'alumine contenues dans les catalyseurs,
chaque métal étant récupéré,
* soit à partir de son chlorure et/ou de son oxychlorure volatilisé et condensé sélectivement,
* soit sous forme de son chlorure en solution, à partir du résidu de chloruration de catalyseur, lequel a été soumis à une lixiviation, en vue de solubiliser les chlorures et/ou oxychlorures des métaux contenus dans ce résidu.

3. Procédé de récupération respectivement de chacun des métaux contenus dans l'un des ensembles suivants:
W - Ti,
Ni - Mo,
Co - Mo,
Co - W,
Ni - W,
V - Fe,
V - Ni,
Co - Ni - Mo,
Co - Ni - W,
Co - Ni - W - V,
ou
Co - Ni - Mo - V,
à partir de matériaux contenant des métaux réfractaires et/ou de transition et notamment à partir de catalyseurs usés contenant ces susdits ensembles, ces matériaux, notamment ces catalyseurs pouvant contenir de l'humidité, et des impuretés telles que des hydrocarbures, du soufre, du charbon, la quantité de charbon et de soufre ne dépassant pas 35 % en poids, et le soufre étant notamment en quantité inférieure ou égale à 15 % en poids et le charbon étant notamment en quantité inférieure ou égale à 20 % en poids, et ces catalyseurs contenant également notamment de 0% à 35% (en poids) de matières réductrices, les catalyseurs usés à traiter contenant du soufre et du carbone en quantité telle que le rapport molaire (C + S)/(somme Co, Ni, V, Ti, Mo, Fe, W) est inférieur à environ 1,2, caractérisé en ce que :
- l'on n'effectue pas de traitement pour éliminer la vapeur d'eau éventuellement présente ainsi que les impuretés éventuellement présentes, et
- en ce que l'on effectue la chloruration des susdits matériaux, notamment des catalyseurs usés, à l'aide d'un mélange gazeux choisi parmi les mélanges suivants:
chlore - gaz inerte + gaz réducteur,
cette chloruration ayant lieu à une température de 250 à 600°C et à une pression totale de 10 kPa à 300 kPa (0,1 à 3 bars), et conduisant d'une part à la volatilisation de certains des métaux sous forme de chlorure et/ou oxychlorures lesquels forment le condensat et d'autre part à l'obtention d'un résidu de matériaux, notamment de catalyseurs contenant des chlorures de métaux non volatilisés,
les supports des catalyseurs réagissant avec le mélange chlorurant de façon suffisamment faible pour que la quantité respective de silice ou d'alumine transformée en chlorures soit inférieure à environ 5% de la silice et à environ 15% de l'alumine contenues dans les catalyseurs,
chaque métal étant récupéré,
* soit à partir de son chlorure et/ou de son oxychlorure volatilisé et condensé sélectivement,
* soit sous forme de son chlorure en solution, à partir du résidu de chloruration de catalyseur, lequel a été soumis à une lixiviation, en vue de solubiliser les chlorures et/ou oxychlorures des métaux contenus dans ce résidu.

4. Procédé de récupération respectivement de chacun des métaux contenus dans l'un des ensembles suivants:
W - Ti,
Ni - Mo,
Co - Mo,
Co - W,
Ni - W,
V - Fe,
V - Ni,
Co - Ni - Mo,
Co - Ni - W,
Co - Ni - W - V,
ou
Co - Ni - Mo - V,
à partir de matériaux contenant des métaux réfractaires et/ou de transition et notamment à partir de catalyseurs usés contenant ces susdits ensembles, ces matériaux, notamment ces catalyseurs pouvant contenir de l'humidité, et des impuretés telles que des hydrocarbures, du soufre, du charbon, la quantité de charbon et de soufre ne dépassant pas 35 % en poids, et le soufre étant notamment en quantité inférieure ou égale à 15 % en poids et le charbon étant notamment en quantité inférieure ou égale à 20 % en poids, et ces catalyseurs contenant également notamment de 0% à 35% (en poids) de matières réductrices, les catalyseurs à traiter contenant du soufre et du carbone en quantité telle que le rapport molaire (C + S)/(somme de Co, Ni, V, Ti, W, Mo, Fe) est supérieur à 4, caractérisé en ce que :
- l'on n'effectue pas de traitement pour éliminer la vapeur d'eau éventuellement présente ainsi que les impuretés éventuellement présentes, et
- en ce que l'on effectue la chloruration des susdits matériaux, notamment des catalyseurs usés, à l'aide d'un mélange gazeux choisi parmi les mélanges suivants:
chlore - gaz inerte + air
cette chloruration ayant lieu à une température de 250 à 600°C et à une pression totale de 10 kPa à 300 kPa (0,1 à 3 bars), et conduisant d'une part à la volatilisation de certains des métaux sous forme de chlorure et/ou oxychlorures lesquels forment le condensat et d'autre part à l'obtention d'un résidu de matériaux, notamment de catalyseurs contenant des chlorures de métaux non volatilisés,
les supports des catalyseurs réagissant avec le mélange chlorurant de façon suffisamment faible pour que la quantité respective de silice ou d'alumine transformée en chlorures soit inférieure à environ 5% de la silice et à environ 15% de l'alumine contenues dans les catalyseurs,
chaque métal étant récupéré,
* soit à partir de son chlorure et/ou de son oxychlorure volatilisé et condensé sélectivement,
* soit sous forme de son chlorure en solution, à partir du résidu de chloruration de catalyseur, lequel a été soumis à une lixiviation, en vue de solubiliser les chlorures et/ou oxychlorures des métaux contenus dans ce résidu.

5. Procédé selon l'une des revendications 1 à 4, caractérisé en ce que les matériaux contenant les composés de métaux réfractaires et/ou de transition proviennent de déchets de l'industrie de métaux non ferreux, notamment dans le domaine chimique et métallurgique.

6. Procédé selon l'une des revendications 1 à 5, caractérisé en ce que:
- dans le mélange chlore-air, le rapport volumique chlore/air est de 0,1 à 2, avantageusement de 0,15 à 1,
- dans le mélange chlore-gaz inerte, le rapport volumique chlore/gaz inerte est de 0,05 à 2, avantageusement de 0,1 à 1,
- dans le mélange chlore-gaz inerte + gaz réducteur, le rapport volumique chlore/gaz inerte + gaz réducteur est de 0,1 à 3, avantageusement de 0,15 à 2,
- dans le mélange chlore - gaz inerte + air, le rapport volumique chlore/ gaz inerte + air est de 0,1 à 2, et avantageusement de 0,15 à 1.

7. Procédé selon l'une quelconque des revendications 1 à 6, caractérisé en ce que le gaz inerte est de l'azote ou de l'hélium ou de l'argon.

8. Procédé selon l'une quelconque des revendications 1 à 7, de récupération respectivement de W et Ti, à partir d'un matériau, notamment d'un catalyseur usé à base de W ayant un support de TiO₂, caractérisé en ce que la chloruration a lieu à l'aide d'un mélange de chloruration selon l'une quelconque des revendications 1 à 8, à une température allant de 250 à 650°C, de préférence de 350 à 550°C,
. W étant récupéré dans le condensat, sous forme de chlorure et/ou d'oxychlorure de W, à une température de 15 à 200°C, avantageusement de 50 à 150°C,
. Ti étant récupéré dans le condensat, sous forme de chlorure de Ti, à une température de -50 à 50°C, avantageusement de -40 à -20°C.

9. Procédé selon l'une quelconque des revendications 1 à 7, de récupération respectivement de Ni et Mo, à partir d'un matériau, notamment d'un catalyseur usé à base de Ni et Mo, caractérisé en ce que la chloruration a lieu à l'aide d'un mélange de chloruration selon l'une quelconque des revendications 1 à 7, à une température allant de 250 à 650°C, de préférence de 400 à 550°C,
. Mo étant récupéré dans le condensat, sous forme de chlorure de Mo à une température de 20 à 200°C, de préférence de 50 à 150°C,
. Ni étant récupéré par lixiviation du résidu de chloruration, sous forme de chlorure de Ni, à une température de 20 à 100°C, avantageusement de 30 à 80°C.

10. Procédé selon l'une quelconque des revendications 1 à 7, de récupération respectivement de Co et Mo, à partir d'un matériau, notamment d'un catalyseur usé à base de Co et Mo, caractérisé en ce que la chloruration a lieu à l'aide d'un mélange de chloruration selon l'une quelconque des revendications 1 à 8, à une température allant de 250 à 650°C, de préférence de 400 à 550°C,
. Mo étant récupéré dans le condensat, sous forme de chlorure et/ou d'oxychlorure de Mo à une température de 20 à 200°C, de préférence de 50 à 150°C,
. Co étant récupéré par lixiviation du résidu de chloruration, sous forme de chlorure de Co, à une température de 20 à 100°C, avantageusement de 30 à 80°C.

11. Procédé selon l'une quelconque des renvendications 1 à 7, de récupération repectivement de Co et W, à partir d'un matériau, notamment d'un catalyseur usé à base de Co et W, caractérisé en ce que la chloruration a lieu à l'aide d'un mélange de chloruration selon l'une quelconque des revendications 1 à 8, à une température allant de 250 à 650°C, de préférence de 350 à 550°C,
. W étant récupéré dans le condensat, sous forme de chlorure et/ou d'oxychlorure de W, à une température de 15 à 200°C, de préférence de 50 à 150°C,
. Co étant récupéré par lixiviation du résidu de chloruration, sous forme de chlorure de Co, à une température de 20 à 100°C, avantageusement de 30 à 80°C.

12. Procédé selon l'une quelconque des revendications 1 à 7, de récupération du W et du Ni, à partir d'un matériau, notamment d'un catalyseur usé à base de W et de Ni, caractérisé en ce que la chloruration a lieu à l'aide d'un mélange de chloruration selon l'une quelconque des revendications 1 à 7, à une température allant de 250 à 650°C, de préférence de 350 à 550°C,
. W étant récupéré dans le condensat, sous forme de chlorure et/ou d'oxychlorure de W à une température de 15 à 200°C, de préférence de 50 à 150°C,
. Ni étant récupéré par lixiviation du résidu de chloruration, sous forme de chlorure de Ni, à une température de 20 à 100°C, avantageusement de 30 à 80°C.

13. Procédé selon l'une quelconque des revendications 1 à 7, de récupération respectivement de V et Fe, à partir d'un matériau, notamment d'un catalyseur usé à base de V, caractérisé en ce que la chloruration à lieu à l'aide d'un mélange de chloruration selon l'une quelconque des revendications 1 à 6, à une température allant de 250 à 650°C, de préférence de 350 à 550°C.
. V étant récupéré dans le condensat, sous forme de chlorure et/ou d'oxychlorure de V, à une température de -80 à 150°C, de préférence de -40 à 20°C,
. Fe étant récupéré, selon la composition du mélange gazeux, dans le résidu sous forme d'oxyde de Fe ou dans le condensat sous forme de chlorure et/ou d'oxychlorure de Fe, à une température de 20 à 200°C, de préférence de 50 à 150°C.

14. Procédé selon l'une quelconque des revendications 1 à 7, de récupération de V et Ni, à partir d'un matériau, notamment d'un catalyseur usé contenant V et Ni, caractérisé en ce que la chloruration a lieu à l'aide d'un mélange de chloruration selon l'une quelconque des revendications 1 à 7, à une température allant de 250 à 650°C, de préférence de 350 à 550°C,
. V étant récupéré dans le condensat, sous forme de chlorure et/ou d'oxychlorure de V à une température de -80 à 150°C, de préférence de -40 à 20°C,
. Ni étant récupéré dans le résidu, sous forme de chlorure de Ni, à une température de 20 à 100°C, avantageusement de 30 à 80°C.

15. Procédé selon l'une quelconque des revendications 1 à 7, de récupération respectivement de Co, Ni, et Mo, à partir d'un matériau, notamment d'un catalyseur usé à base de Co, Ni et Mo, caractérisé en ce que la chloruration a lieu à l'aide d'un mélange de chloruration selon l'une quelconque des revendications 1 à 8, à une température allant de 250 à 650°C, de préférence de 400 à 550°C,
. Mo étant récupéré dans le condensat sous forme de chlorure et/ou d'oxychlorure de Mo à une température de 20 à 200°C, de préférence de 50 à 150°C,
. Co et Ni étant récupérés par lixiviation du résidu de chloruration, sous forme de chlorures de Co et de Ni, à une température de 20 à 100°C, avantageusement de 30 à 80°C, ces chlorures étant ensuite séparés par des méthodes classiques.

16. Procédé selon l'une quelconque des revendications 1 à 7, de récupération respectivement de Co, Ni, et W à partir d'un matériau, notamment d'un catalyseur usé à base de Co, Ni et W, caractérisé en ce que la chloruration a lieu à l'aide d'un mélange de chloruration selon l'une quelconque des revendications 1 à 8, à une température allant de 250 à 650°C, de préférence de 350 à 550°C,
. W étant récupéré dans le condensat sous forme de chlorure et/ou d'oxychlorure de W, à une température de 15 à 200°C, de préférence de 50 à 150°C,
. Co et Ni étant récupérés par lixiviation du résidu de chloruration, sous forme de chlorures de Co et Ni, à une température de 20 à 100°C, avantageusement de 30 à 80°C, ces chlorures étant ensuite séparés par des méthodes classiques.

17. Procédé selon l'une quelconque des revendications 1 à 7, de récupération de Co, Ni, W, et V à partir d'un matériau, notamment d'un catalyseur usé à base de Co, Ni et W, caractérisé en ce que la chloruration a lieu à l'aide d'un mélange de chloruration selon l'une quelconque des revendications 1 à 7, à une température allant de 250 à 650°C, de préférence de 350 à 550°C,
. W étant récupéré dans le condensat sous forme de chlorure et/ou d'oxychlorure de W, à une température de 15 à 200°C, de préférence de 50 à 150°C,
. V étant récupéré dans le condensat sous forme de chlorures et/ou d'oxychlorures de V à une température de -80 à 150°C de préférence de -40 à 20°C,
. Co et Ni étant récupérés par lixiviation du résidu de chloruration, sous forme de chlorures de Co et Ni, à une température de 20 à 100°C, avantageusement de 30 à 80°C, ces chlorures étant ensuite séparés par des méthodes classiques.

18. Procédé selon l'une quelconque des revendications 1 à 7, de récupération de Co, Ni, Mo, et V, à partir d'un matériau, notamment d'un catalyseur usé à base de Co, Ni et Mo, caractérisé en ce que la chloruration a lieu à l'aide d'un mélange de chloruration selon l'une quelconque des revendications 1 à 8, à une température allant de 250 à 650°C, de préférence de 400 à 550°C,
. Mo étant récupéré dans le condensat sous forme de chlorure et/ou d'oxychlorure de Mo, à une tenipérature de 20 à 200°C, avantageusement de 50 à 150°C,
. V étant récupéré dans le condensat, sous forme de chlorure et/ou d'oxychlorure de V, à une température de -80 à 150°C, avantageusement de -40 à 20°C,
. Co et Ni étant récupérés par lixiviation du résidu de chloruration, sous forme de chlorures de Co et de Ni, à une température de 20 à 100°C, avantageusement de 30 à 80°C, ces chlorures étant ensuite séparés par des méthodes classiques.

## Patentansprüche

1. Verfahren für die jeweilige Rückgewinnung jeder Metalle wie in einer der folgenden Mengen enthalten:
W - Ti,
Ni -Mo,
Co - Mo,
Co - W,
Ni - W,
V - Fe,
V - Ni,
Co - Ni - Mo,
Co - Ni - W,
Co - Ni - W - V,
oder
Co - Ni - Mo - V,
aus Materialien, die hitzebeständige oder Übergangsmetalle enthalten, und zwar vor allem aus verbrauchten Katalysatoren, die diese Mengen enthalten, worin diese Materialien, vor allem diese Katalysatoren Feuchtigkeit enthalten können, sowie Verunreinigungen wie Kohlenwasserstoffe, Schwefel, Kohle, worin die Gesamtmasse der Kohle und des Schwefels nicht 35 Gew.% überschreitet, und worin vor allem der Schwefel unter oder bei 15 Gew.% und die Kohle unter oder bei 20 Gew.% vorliegt, und diese Katalysatoren auch vor allem 0 bis 35 (Gew.)% reduzierende Materialien enthalten, und die zu behandelnden Katalysatoren Schwefel und Kohle enthalten, und zwar in einer solchen Masse, daß das (C + S)/(Summe von Co, Ni, V, Ti, W, Mo, Fe) Molverhältnis zwischen 2 und 4 liegt, oder die verbrauchten zu behandelnden Katalysatoren Schwefel und Kohle enthalten, und zwar in einer solchen Masse, daß das (C + S)/(Summe von Co, Ni, V, Ti, Mo, Fe, W) Molverhältnis unter ungefähr 1,2 liegt, dadurch gekennzeichnet, daß :
- keine Behandlung für die Entsorgung des allfällig anwesenden Wasserdampfes und Verunreinigkeiten durchgeführt wird, und
- die Chlorierung der besagten Materialien, vor allem der verbrauchten Katalysatoren mit:
Chlor - Luft
durchgeführt wird,
und wenn die zu behandelnden verbrauchten Katalysatoren Schwefel und Kohle enthalten, und zwar in einer solchen Masse, daß das (C + S)/(Summe von Co, Ni, V, Ti, Mo, Fe, W) Molverhältnis unter ungefähr 1,2 liegt, reduzierende Materialien, vor allem kohlehaltige Materialien wie Holzkohle, Kohle, Braunkohle, Koksformkörper, Koks, usw. und vorteilhaft Kohle vor der Chlorierung zugefügt werden, worin die Masse der vor der Chlorierung zuzufügenden reduzierenden Materialien so angepaßt wird, daß das (reduzierende Materialien)/(Summe von Co, Ni, V, Ti, W, Mo, Fe) Molverhältnis mindestens über oder bei ungefähr 1,5 liegt,
worin diese Chlorierung bei einer Temperatur von 250 bis 600 Grad und bei einem Gesamtdruck von 10 kPa bis 300 kPa (0,1 bis 3 Bar) durchgeführt wird, und einerseits zur Verflüchtigung von einigen Metallen in der Form von Chlorid und/oder Oxychloride führt, worin diese das Kondensat bilden, und andererseits zur Gewinnung eines Materialrückstand, vor allem von Katalysatoren, die nicht-verflüchtigte Metallchloride enthalten,
worin die Katalysatorträger mit der chloridierenden Mischung in ausreichend schwächer Weise reagieren, daß die jeweilige Masse der in Chloride umgewandelten Kieselerde oder Tonerde unter jeweils ungefähr 5 Prozent und ungefähr 15 Prozent der in den Katalysatoren enthaltenen Kieselerde beziehungsweise Tonerde liegt,
worin jedes Metall rückgewinnt wird, und zwar
* entweder aus seinem verflüchtigtem und selektiv ankondensierten Chlorid und/oder Oxychlorid,
* oder in Form von seinem gelösten Chlorid, aus dem Katalysator-Chloridierungsrückstand, nach einem Auslaugen desselben, um die Chloride und/oder Oxychloride der in diesem Rückstand enthaltenen Metalle löslich zu machen.

2. Verfahren für die jeweilige Rückgewinnung jeder Metalle wie in einer der folgenden Mengen enthalten:
W - Ti,
Ni -Mo,
Co - Mo,
Co - W,
Ni - W,
V - Fe,
V - Ni,
Co - Ni - Mo,
Co - Ni - W,
Co - Ni - W - V,
oder
Co - Ni - Mo - V,
aus Materialien, die hitzebeständige oder Übergangsmetalle enthalten, und zwar vor allem aus verbrauchten Katalysatoren, die diese Mengen enthalten, worin diese Materialien, vor allem diese Katalysatoren Feuchtigkeit enthalten können, sowie Verunreinigungen wie Kohlenwasserstoffe, Schwefel, Kohle, worin die Gesamtmasse der Kohle und des Schwefels nicht 35 Gew.% überschreitet, und worin vor allem der Schwefel unter oder bei 15 Gew.% und die Kohle unter oder bei 20 Gew.% vorliegt, und diese Katalysatoren auch vor allem 0 bis 35 (Gew.)% reduzierende Materialien enthalten, und die zu behandelnden Katalysatoren Schwefel und Kohle enthalten, und zwar in einer solchen Masse, daß das (C + S)/(Summe von Co, Ni, V, Ti, W, Mo, Fe) Molverhältnis zwischen 1,2 und 2 liegt, dadurch gekennzeichnet, daß :
- keine Behandlung für die Entsorgung des allfällig anwesenden Wasserdampfes und Verunreinigkeiten durchgeführt wird, und
- die Chlorierung der besagten Materialien, vor allem der verbrauchten Katalysatoren mit:
Chlor - Inertgas
durchgeführt wird,
worin diese Chlorierung bei einer Temperatur von 250 bis 600 Grad und bei einem Gesamtdruck von 10 kPa bis 300 kPa (0,1 bis 3 Bar) durchgeführt wird, und einerseits zur Verflüchtigung von einigen Metallen in der Form von Chlorid und/oder Oxychloride führt, worin diese das Kondensat bilden, und andererseits zur Gewinnung eines Materialrückstand, vor allem von Katalysatoren, die nicht-verflüchtigte Metallchloride enthalten,
worin die Katalysatorträger mit der chloridierenden Mischung in ausreichend schwächer Weise reagieren, daß die jeweilige Masse der in Chloride umgewandelten Kieselerde oder Tonerde unter jeweils ungefähr 5 Prozent und ungefähr 15 Prozent der in den Katalysatoren enthaltenen Kieselerde beziehungsweise Tonerde liegt,
worin jedes Metall rückgewinnt wird, und zwar
* entweder aus seinem verflüchtigtem und selektiv ankondensierten Chlorid und/oder Oxychlorid,
* oder in Form von seinem gelösten Chlorid, aus dem Katalysator-Chloridierungsrückstand, nach einem Auslaugen desselben, um die Chloride und/oder Oxychloride der in diesem Rückstand enthaltenen Metalle löslich zu machen.

3. Verfahren für die jeweilige Rückgewinnung jeder Metalle wie in einer der folgenden Mengen enthalten:
W - Ti,
Ni -Mo,
Co - Mo,
Co - W,
Ni - W,
V - Fe,
V - Ni,
Co - Ni - Mo,
Co - Ni - W,
Co - Ni - W - V,
oder
Co - Ni - Mo - V,
aus Materialien, die hitzebeständige oder Übergangsmetalle enthalten, und zwar vor allem aus verbrauchten Katalysatoren, die diese Mengen enthalten, worin diese Materialien, vor allem diese Katalysatoren Feuchtigkeit enthalten können, sowie Verunreinigungen wie Kohlenwasserstoffe, Schwefel, Kohle, worin die Gesamtmasse der Kohle und des Schwefels nicht 35 Gew.% überschreitet, und worin vor allem der Schwefel unter oder bei 15 Gew.% und die Kohle unter oder bei 20 Gew.% vorliegt, und diese Katalysatoren auch vor allem 0 bis 35 (Gew.)% reduzierende Materialien enthalten, und die zu behandelnden Katalysatoren Schwefel und Kohle enthalten, und zwar in einer solchen Masse, daß das (C + S)/(Summe von Co, Ni, V, Ti, Mo, Fe, W) Molverhältnis unter ungefähr 1,2 liegt, dadurch gekennzeichnet, daß
- keine Behandlung für die Entsorgung des allfällig anwesenden Wasserdampfes und Verunreinigkeiten durchgeführt wird, und
- die Chlorierung der besagten Materialien, vor allem der verbrauchten Katalysatoren mit einer Gasmischung, die unter den folgenden gewählt :
Chlor - Inertgas + reduzierendes Gas durchgeführt wird,
worin diese Chlorierung bei einer Temperatur von 250 bis 600 Grad und bei einem Gesamtdruck von 10 kPa bis 300 kPa (0,1 bis 3 Bar) durchgeführt wird, und einerseits zur Verflüchtigung von einigen Metallen in der Form von Chlorid und/oder Oxychloride führt, worin diese das Kondensat bilden, und andererseits zur Gewinnung eines Materialrückstand, vor allem von Katalysatoren, die nicht-verflüchtigte Metallchloride enthalten,
worin die Katalysatorträger mit der chloridierenden Mischung in ausreichend schwächer Weise reagieren, daß die jeweilige Masse der in Chloride umgewandelten Kieselerde oder Tonerde unter jeweils ungefähr 5 Prozent und ungefähr 15 Prozent der in den Katalysatoren enthaltenen Kieselerde beziehungsweise Tonerde liegt,
worin jedes Metall rückgewinnt wird, und zwar
* entweder aus seinem verflüchtigtem und selektiv ankondensierten Chlorid und/oder Oxychlorid,
* oder in Form von seinem gelösten Chlorid, aus dem Katalysator-Chloridierungsrückstand, nach einem Auslaugen desselben, um die Chloride und/oder Oxychloride der in diesem Rückstand enthaltenen Metalle löslich zu machen.

4. Verfahren für die jeweilige Rückgewinnung jeder Metalle wie in einer der folgenden Mengen enthalten:
W - Ti,
Ni -Mo,
Co - Mo,
Co - W,
Ni - W,
V - Fe,
V - Ni,
Co - Ni - Mo,
Co - Ni - W,
Co - Ni - W - V,
oder
Co - Ni - Mo - V,
aus Materialien, die hitzebeständige oder Übergangsmetalle enthalten, und zwar vor allem aus verbrauchten Katalysatoren, die diese Mengen enthalten, worin diese Materialien, vor allem diese Katalysatoren Feuchtigkeit enthalten können, sowie Verunreinigungen wie Kohlenwasserstoffe, Schwefel, Kohle, worin die Gesamtmasse der Kohle und des Schwefels nicht 35 Gew.% überschreitet, und worin vor allem der Schwefel unter oder bei 15 Gew.% und die Kohle unter oder bei 20 Gew.% vorliegt, und diese Katalysatoren auch vor allem 0 bis 35 (Gew.)% reduzierende Materialien enthalten, und die zu behandelnden Katalysatoren Schwefel und Kohle enthalten, und zwar in einer solchen Masse, daß das (C + S)/(Summe von Co, Ni, V, Ti, W, Mo, Fe) Molverhältnis über 4 liegt, dadurch gekennzeichnet, daß :
- keine Behandlung für die Entsorgung des allfällig anwesenden Wasserdampfes und Verunreinigkeiten durchgeführt wird, und
- die Chlorierung der besagten Materialien, vor allem der verbrauchten Katalysatoren mit einer Gasmischung, die unter den folgenden gewählt :
Chlor - Inertgas + Luft
durchgeführt wird,
worin diese Chlorierung bei einer Temperatur von 250 bis 600 Grad und bei einem Gesamtdruck von 10 kPa bis 300 kPa (0,1 bis 3 Bar) durchgeführt wird, und einerseits zur Verflüchtigung von einigen Metallen in der Form von Chlorid und/oder Oxychloride führt, worin diese das Kondensat bilden, und andererseits zur Gewinnung eines Materialrückstand, vor allem von Katalysatoren, die nicht-verflüchtigte Metallchloride enthalten,
worin die Katalysatorträger mit der chloridierenden Mischung in ausreichend schwächer Weise reagieren, daß die jeweilige Masse der in Chloride umgewandelten Kieselerde oder Tonerde unter jeweils ungefähr 5 Prozent und ungefähr 15 Prozent der in den Katalysatoren enthaltenen Kieselerde beziehungsweise Tonerde liegt,
worin jedes Metall rückgewinnt wird, und zwar
* entweder aus seinem verflüchtigtem und selektiv ankondensierten Chlorid und/oder Oxychlorid,
* oder in Form von seinem gelösten Chlorid, aus dem Katalysator-Chloridierungsrückstand, nach einem Auslaugen desselben, um die Chloride und/oder Oxychloride der in diesem Rückstand enthaltenen Metalle löslich zu machen.

5. Verfahren nach einer der Ansprüche 1 bis 4, dadurch gekennzeichnet, daß die Materialien, die die hitzebeständige und/oder Übergangsmetalle enthalten aus Abfallstoffe der nicht-eisenhaltigen Metallindustrie kommen, vor allem im Gebiet der Chemie und der Metallurgie.

6. Verfahren nach einer der Ansprüche 1 bis 5, dadurch gekennzeichnet, daß :
- in der Chlor-Luft Mischung, das Chlor/Luft Volumenverhältnis zwischen 0,1 und 2, vorzugsweise zwischen 0,15 und 1 liegt,
- in der Chlor-Inertgas Mischung, das Chlor/Inertgas Volumenverhältnis zwischen 0,05 und 2, vorzugsweise zwischen 0,1 und 1 liegt,
- in der Chlor-Inertgas + reduzierendes Gas Mischung, das Chlor/Inertgas + reduzierendes Gas Volumenverhältnis zwischen 0,1 und 3, vorzugsweise zwischen 0,15 und 2 liegt,
- in der Chlor - Inertgas + Luft Mischung, das Chlor/Inertgas + Luft Volumenverhältnis zwischen 0,1 und 2, vorzugsweise zwischen 0,15 und 2 liegt.

7. Verfahren nach irgendeiner der Ansprüche 1 bis 6, dadurch gekennzeichnet, daß das Inertgas Stickstoff oder Helium oder Argon ist.

8. Verfahren nach irgendeiner der Ansprüche 1 bis 7, für die jeweilige Rückgewinnung von W und Ti, aus einem Material, vor allem einem auf W-Basis mit einem TiO₂ Träger verbrauchten Katalysator, dadurch gekennzeichnet, daß die Chlorierung mit einer Chloriermischung nach irgendeiner der Ansprüche 1 bis 7 bei einer Temperatur von 250 bis 650 Grad, vorzugsweise von 350 bis 550 Grad durchgeführt wird,
. worin W im Kondensat in der Form von W-Chlorid oder -Oxychlorid bei einer Temperatur von 15 bis 200 Grad, vorzugsweise von 50 bis 150 Grad zurückgewinnt wird,
. und worin Ti im Kondensat in der Form von Ti-Chlorid bei einer Temperatur von -50 bis 50 Grad, vorzugsweise von -40 bis -20 Grad zurückgewinnt wird.

9. Verfahren nach irgendeiner der Ansprüche 1 bis 7, für die Rückgewinnung von Ni beziehungsweise von Mo, aus einem Material, vor allem einem auf Ni- und Mo-Basis verbrauchten Katalysator, dadurch gekennzeichnet, daß die Chlorierung mit einer Chloriermischung nach irgendeiner der Ansprüche 1 bis 7 bei einer Temperatur von 250 bis 650 Grad, vorzugsweise von 400 bis 550 Grad durchgeführt wird,
. worin Mo im Kondensat in der Form von Mo-Chlorid bei einer Temperatur von 20 bis 200 Grad, vorzugsweise von 50 bis 150 Grad zurückgewinnt wird,
. und worin Ni durch Auslaugen des Chlorierrückstands in der Form von Ni-Chlorid bei einer Temperatur von 20 bis 100 Grad, vorzugsweise von 30 bis 80 Grad zurückgewinnt wird.

10. Verfahren nach irgendeiner der Ansprüche 1 bis 7, für die Rückgewinnung von Co bzw Mo, aus einem Material, vor allem aus einem auf Co und Mo-Basis verbrauchten Katalysator, dadurch gekennzeichnet, daß die Chlorierung mit einer Chloriermischung nach irgendeiner der Ansprüche 1 bis 8 bei einer Temperatur von 250 bis 650 Grad, vorzugsweise von 400 bis 550 Grad durchgeführt wird,
. worin Mo im Kondensat in der Form von Mo-Chlorid und/oder -Oxychlorid bei einer Temperatur von 20 bis 200 Grad, vorzugsweise von 50 bis 150 Grad zurückgewinnt wird,
. und worin Co durch Auslaugen des Chlorierrückstands in der Form von Co-Chlorid bei einer Temperatur von 20 bis 100 Grad, vorzugsweise von 30 bis 80 Grad zurückgewinnt wird.

11. Verfahren nach irgendeiner der Ansprüche 1 bis 7 für die Rückgewinnung von Co bzw W aus einem Material, vor allem aus einem auf Co und W-Basis verbrauchten Katalysator, dadurch gekennzeichnet, daß die Chlorierung mit einer Chloriermischung nach irgendeiner der Ansprüche 1 bis 8 bei einer Temperatur von 250 bis 650 Grad, vorzugsweise von 350 bis 550 Grad durchgeführt wird,
. worin W im Kondensat in der Form von W-Chlorid und/oder -Oxychlorid bei einer Temperatur von 15 bis 200 Grad, vorzugsweise von 50 bis 150 Grad zurückgewinnt wird,
. und worin Co durch Auslaugen des Chlorierrückstands in der Form von Co-Chlorid bei einer Temperatur von 20 bis 100 Grad, vorzugsweise von 30 bis 80 Grad zurückgewinnt wird.

12. Verfahren nach irgendeiner der Ansprüche 1 bis 7 für die Rückgewinnung von W bzw Ni aus einem Material, vor allem aus einem auf W und Ni-Basis verbrauchten Katalysator, dadurch gekennzeichnet, daß die Chlorierung mit einer Chloriermischung nach irgendeiner der Ansprüche 1 bis 7 bei einer Temperatur von 250 bis 650 Grad, vorzugsweise von 350 bis 550 Grad durchgeführt wird,
. worin W im Kondensat in der Form von W-Chlorid und/oder -Oxychlorid bei einer Temperatur von 15 bis 200 Grad, vorzugsweise von 50 bis 150 Grad zurückgewinnt wird,
. und worin Ni durch Auslaugen des Chlorierrückstands in der Form von Ni-Chlorid bei einer Temperatur von 20 bis 100 Grad, vorzugsweise von 30 bis 80 Grad zurückgewinnt wird.

13. Verfahren nach irgendeiner der Ansprüche 1 bis 7 für die Rückgewinnung von V bzw Fe aus einem Material, vor allem aus einem auf V-Basis verbrauchten Katalysator, dadurch gekennzeichnet, daß die Chlorierung mit einer Chloriermischung nach irgendeiner der Ansprüche 1 bis 6 bei einer Temperatur von 250 bis 650 Grad, vorzugsweise von 350 bis 550 Grad durchgeführt wird,
. worin V im Kondensat in der Form von V-Chlorid und/oder -Oxychlorid bei einer Temperatur von -80 bis 150 Grad, vorzugsweise von -40 bis 20 Grad zurückgewinnt wird,
. und worin Fe nach der Zusammensetzung der Gasmischung im Rückstand in der Form von Fe-Oxyd oder im Kondensat in der Form von Fe-Chlorid oder - Oxychlorid bei einer Temperatur von 20 bis 200 Grad, vorzugsweise von 50 bis 150 Grad zurückgewinnt wird.

14. Verfahren nach irgendeiner der Ansprüche 1 bis 7 für die Rückgewinnung von V bzw Ni aus einem Material, vor allem aus einem auf V und Ni-Basis verbrauchten Katalysator, dadurch gekennzeichnet, daß die Chlorierung mit einer Chloriermischung nach irgendeiner der Ansprüche 1 bis 7 bei einer Temperatur von 250 bis 650 Grad, vorzugsweise von 350 bis 550 Grad durchgeführt wird,
. worin V im Kondensat in der Form von V-Chlorid und/oder -Oxychlorid bei einer Temperatur von -80 bis 150 Grad, vorzugsweise von -40 bis 20 Grad zurückgewinnt wird,
. und worin Ni im Rückstand in der Form von Ni-Chlorid bei einer Temperatur von 20 bis 100 Grad, vorzugsweise von 30 bis 80 Grad zurückgewinnt wird.

15. Verfahren nach irgendeiner der Ansprüche 1 bis 7 für die Rückgewinnung von Co bzw Ni und Mo aus einem Material, vor allem aus einem auf Co, Ni und Mo-Basis verbrauchten Katalysator, dadurch gekennzeichnet, daß die Chlorierung mit einer Chloriermischung nach irgendeiner der Ansprüche 1 bis 8 bei einer Temperatur von 250 bis 650 Grad, vorzugsweise von 350 bis 550 Grad durchgeführt wird,
. worin Mo im Kondensat in der Form von Mo-Chlorid und/oder -Oxychlorid bei einer Temperatur von 20 bis 200 Grad, vorzugsweise von 50 bis 150 Grad zurückgewinnt wird,
. und worin Co und Ni durch Auslaugen des Chlorierrückstands in der Form von Co- und Ni-Chlorid bei einer Temperatur von 20 bis 100 Grad, vorzugsweise von 30 bis 80 Grad zurückgewonnen werden, und worin diese Chloride später nach konventionneller Verfahren gespalten werden.

16. Verfahren nach irgendeiner der Ansprüche 1 bis 7 für die Rückgewinnung von Co, Ni bzw W aus einem Material, vor allem aus einem auf Co, Ni und W-Basis verbrauchten Katalysator, dadurch gekennzeichnet, daß die Chlorierung mit einer Chloriermischung nach irgendeiner der Ansprüche 1 bis 8 bei einer Temperatur von 250 bis 650 Grad, vorzugsweise von 350 bis 550 Grad durchgeführt wird,
. worin W im Kondensat in der Form von W-Chlorid und/oder -Oxychlorid bei einer Temperatur von 15 bis 200 Grad, vorzugsweise von 50 bis 150 Grad zurückgewinnt wird,
. und worin Co und Ni durch Auslaugen des Chlorierrückstands in der Form von Co- und Ni-Chlorid bei einer Temperatur von 20 bis 100 Grad, vorzugsweise von 30 bis 80 Grad zurückgewonnen werden, und worin diese Chloride später nach konventionneller Verfahren gespalten werden.

17. Verfahren nach irgendeiner der Ansprüche 1 bis 7 für die Rückgewinnung von Co bzw Ni, W und V aus einem Material, vor allem aus einem auf Co, Ni und W-Basis verbrauchten Katalysator, dadurch gekennzeichnet, daß die Chlorierung mit einer Chloriermischung nach irgendeiner der Ansprüche 1 bis 7 bei einer Temperatur von 250 bis 650 Grad, vorzugsweise von 350 bis 550 Grad durchgeführt wird,
. worin W im Kondensat in der Form von W-Chlorid und/oder -Oxychlorid bei einer Temperatur von 15 bis 200 Grad, vorzugsweise von 50 bis 150 Grad zurückgewinnt wird,
. und worin V im Kondensat in der Form von V-Chloriden und/oder -Oxychloriden bei einer Temperatur von -80 bis 150 Grad, vorzugsweise von -40 bis 20 Grad zurückgewinnt wird,
. und worin Co und Ni durch Auslaugen des Chlorierrückstands in der Form von Co- und Ni-Chloriden bei einer Temperatur von 20 bis 100 Grad, vorzugsweise von 30 bis 80 Grad zurückgewonnen werden, und worin diese Chloride später durch konventionneller Verfahren gespalten werden.

18. Verfahren nach irgendeiner der Ansprüche 1 bis 7 für die Rückgewinnung von Co bzw Ni, Mo und V aus einem Material, vor allem aus einem auf Co, Ni und Mo-Basis verbrauchten Katalysator, dadurch gekennzeichnet, daß die Chlorierung mit einer Chloriermischung nach irgendeiner der Ansprüche 1 bis 8 bei einer Temperatur von 250 bis 650 Grad, vorzugsweise von 400 bis 550 Grad durchgeführt wird,
. worin Mo im Kondensat in der Form von Mo-Chlorid und/oder -Oxychlorid bei einer Temperatur von 20 bis 200 Grad, vorzugsweise von 50 bis 150 Grad zurückgewinnt wird,
. und worin V im Kondensat in der Form von V-Chlorid und/oder -Oxychlorid bei einer Temperatur von -80 bis 150 Grad, vorzugsweise von -40 bis 20 Grad zurückgewinnt wird,
. und worin Co und Ni durch Auslaugen des Chlorierrückstands in der Form von Co- und Ni-Chloriden bei einer Temperatur von 20 bis 100 Grad, vorzugsweise von 30 bis 80 Grad zurückgewonnen werden, und worin diese Chloride später durch konventionneller Verfahren gespalten werden.

## Claims

1. A process for the respective recovery of each of the metals as contained in one of the following sets:
W - Ti,
Ni -Mo,
Co - Mo,
Co - W,
Ni - W,
V - Fe,
V - Ni,
Co - Ni - Mo,
Co - Ni - W,
Co - Ni - W - V,
or
Co - Ni - Mo - V,
from materials containing refractory and/or transition metals, and notably from used catalysts containing said sets, these materials, notably catalysts which may contain moisture, and impurities such as hydrocarbons, sulfur, carbon, the amount of carbon and sulfur being at most 35% (w), and the sulfur being notably in an amount of 15% (w) or less, and the coal being notably in an amount of 20% (w) or less, and these catalysts also containing notably from 0 to 35% (weight) reducing matter, wherein the catalysts to be treated contain sulfur and carbon in an amount such that the molar ratio (C + S)/(sum of Co, Ni, V, Ti, W, Mo, Fe) is between 2 and 4, or the used catalysts to be treated contain sulfur and carbon in such an amount that the molar ratio (C + S)/(sum of Co, Ni, V, Ti, Mo, Fe, W) is less than about 1.2, characterized in that:
- no treatment is undertaken to eliminate any water vapor as well as any impurities, and
- the chloration of said materials, notably used catalysts, is undertaken with :
chlorine - air,
and in case the used catalysts to be treated contain sulfur and carbon in such an amount that the molar ratio (C + S)/(sum of Co, Ni, V, Ti, Mo, Fe, W) is less than about 1.2, reducing matters, notably carboniferous matters such as charcoal, coal, lignite, molded coke, coke, etc, and advantageously coal are added before chloration of reducing matters, the amount of reducing matter to be added before chloration being such that the molar ratio (reducing matter)/(sum of Co, Ni, V, Ti, W, Mo, Fe) is at least or above about 1.5,
this chloration taking place at a temperature of from 250 to 600°C and at a total pressure of from 10 kPa to 300 kPa (0.1 to 3 bars), and leading on the one hand to the volatilization of some of the metals in the form of chloride and/or oxychlorides forming the condensate, and on the other hand to a material residue, notably non volatilized metal chloride-containing catalysts,
the catalyst carriers reacting so weakly with the chloriding mixture that the respective amount of silica or alumina as transformed into chlorides is less than about 5% of the silica and about 15% of the alumina, as contained in the catalysts,
each metal being collected,
* either from its selectively volatilized and condensed chloride and/or oxychloride,
* or in the form of its chloride in solution, from the catalyst chloration residue, which has been submitted to lixivation, so as to solubilize the chlorides and/or oxychlorides of metals as contained in that residue.

2. A process for the respective recovery of each of the metals as contained in one of the following sets:
W - Ti,
Ni -Mo,
Co - Mo,
Co - W,
Ni - W,
V - Fe,
V - Ni,
Co - Ni - Mo,
Co - Ni - W,
Co - Ni - W - V,
or
Co - Ni - Mo - V,
from materials containing refractory and/or transition metals, and notably from used catalysts containing said sets, these materials, notably catalysts which may contain moisture, and impurities such as hydrocarbons, sulfur, carbon, the amount of carbon and sulfur being at most 35% (w), and the sulfur being notably in an amount of 15% (w) or less, and the coal being notably in an amount of 20% (w) or less, and these catalysts also containing notably from 0 to 35% (weight) reducing matter, wherein the catalysts to be treated contain sulfur and carbon in an amount such that the molar ratio (C + S)/(sum of Co, Ni, V, Ti, W, Mo, Fe) is above 1.2 and under 2, characterized in that:
- no treatment is undertaken to eliminate any water vapor as well as any impurities, and
- the chloration of said materials, notably used catalysts, is undertaken with :
chlorine - inert gas,
this chloration taking place at a temperature of from 250 to 600°C and at a total pressure of from 10 kPa to 300 kPa (0.1 to 3 bars), and leading on the one hand to the volatilization of some of the metals in the form of chloride and/or oxychlorides forming the condensate, and on the other hand to a material residue, notably non volatilized metal chloride-containing catalysts,
the catalyst carriers reacting so weakly with the chloriding mixture that the respective amount of silica or alumina as transformed into chlorides is less than about 5% of the silica and about 15% of the alumina, as contained in the catalysts,
each metal being collected,
* either from its selectively volatilized and condensed chloride and/or oxychloride,
* or in the form of its chloride in solution, from the catalyst chloration residue, which has been submitted to lixivation, so as to solubilize the chlorides and/or oxychlorides of metals as contained in that residue.

3. A process for the respective recovery of each of the metals as contained in one of the following sets:
W - Ti,
Ni -Mo,
Co - Mo,
Co - W,
Ni - W,
V - Fe,
V - Ni,
Co - Ni - Mo,
Co - Ni - W,
Co - Ni - W - V,
or
Co - Ni - Mo - V,
from materials containing refractory and/or transition metals, and notably from used catalysts containing said sets, these materials, notably catalysts which may contain moisture, and impurities such as hydrocarbons, sulfur, carbon, the amount of carbon and sulfur being at most 35% (w), and the sulfur being notably in an amount of 15% (w) or less, and the coal being notably in an amount of 20% (w) or less, and these catalysts also containing notably from 0 to 35% (weight) reducing matter, wherein the used catalysts to be treated contain sulfur and carbon in an amount such that the molar ratio (C + S)/(sum of Co, Ni, V, Ti, W, Mo, Fe) is under about 1.2, characterized in that:
- no treatment is undertaken to eliminate any water vapor as well as any impurities, and
- the chloration of said materials, notably used catalysts, is undertaken with a gas mixture chosen among the following mixtures:
chlorine - inert gas + reducing gas,
this chloration taking place at a temperature of from 250 to 600°C and at a total pressure of from 10 kPa to 300 kPa (0.1 to 3 bars), and leading on the one hand to the volatilization of some of the metals in the form of chloride and/or oxychlorides forming the condensate, and on the other hand to a material residue, notably non volatilized metal chloride-containing catalysts,
the catalyst carriers reacting so weakly with the chloriding mixture that the respective amount of silica or alumina as transformed into chlorides is less than about 5% of the silica and about 15% of the alumina, as contained in the catalysts,
each metal being collected,
* either from its selectively volatilized and condensed chloride and/or oxychloride,
* or in the form of its chloride in solution, from the catalyst chloration residue, which has been submitted to lixivation, so as to solubilize the chlorides and/or oxychlorides of metals as contained in that residue.

4. A process for the respective recovery of each of the metals as contained in one of the following sets:
W - Ti,
Ni -Mo,
Co - Mo,
Co - W,
Ni - W,
V - Fe,
V - Ni,
Co - Ni - Mo,
Co - Ni - W,
Co - Ni - W - V,
or
Co - Ni - Mo - V,
from materials containing refractory and/or transition metals, and notably from used catalysts containing said sets, these materials, notably catalysts which may contain moisture, and impurities such as hydrocarbons, sulfur, carbon, the amount of carbon and sulfur being at most 35% (w), and the sulfur being notably in an amount of 15% (w) or less, and the coal being notably in an amount of 20% (w) or less, and these catalysts also containing notably from 0 to 35% (weight) reducing matter, wherein the catalysts to be treated contain sulfur and carbon in an amount such that the molar ratio (C + S)/(sum of Co, Ni, V, Ti, W, Mo, Fe) is above 4, characterized in that:
- no treatment is undertaken to eliminate any water vapor as well as any impurities, and
- the chloration of said materials, notably used catalysts, is undertaken with a gas mixture chosen among the following mixtures:
chlorine - inert gas + air,
this chloration taking place at a temperature of from 250 to 600°C and at a total pressure of from 10 kPa to 300 kPa (0.1 to 3 bars), and leading on the one hand to the volatilization of some of the metals in the form of chloride and/or oxychlorides forming the condensate, and on the other hand to a material residue, notably non volatilized metal chloride-containing catalysts,
the catalyst carriers reacting so weakly with the chloriding mixture that the respective amount of silica or alumina as transformed into chlorides is less than about 5% of the silica and about 15% of the alumina, as contained in the catalysts,
each metal being collected,
* either from its selectively volatilized and condensed chloride and/or oxychloride,
* or in the form of its chloride in solution, from the catalyst chloration residue, which has been submitted to lixivation, so as to solubilize the chlorides and/or oxychlorides of metals as contained in that residue.

5. A process according to any of claims 1-4, characterized in that the materials containing the refractory and/or transition metal compounds are obtained from industrial waste in the field of non ferrous metals, notably in the chemical and metallurgical fields.

6. A process according to any of claims 1-5, characterized in that:
- in the chlorine-air mixture, the chlorine/air volume ratio is from 0.1 to 2, advantageously from 0.15 to 1,
- in the chlorine-inert gas mixture, the chlorine/inert gas volume ratio is from 0.05 to 2, advantageously from 0.1 to 1,
- in the chlorine-inert gas + reducing gas mixture, the chlorine/inert gas + reducing gas volume ratio is from 0.1 to 3, advantageously from 0.15 to 2,
- in the chlorine-inert gas + air mixture, the chlorine/inert gas + air volume ratio is from 0.1 to 2, and advantageously from 0.15 to 1.

7. A process according to any of claims 1-6, characterized in that the inert gas is nitrogen or helium or argon.

8. A process according to any of claims 1-7, for the collection, respectively, of W and Ti, from a material, notably a W-based used catalyst with TiO₂ carrier , characterized in that the chloration takes place with a chloration mixture according to any of claims 1-7, at a temperature from between 250 to 650°C, preferably from between 350 to 550°C,
. wherein W is collected from the condensate, in the form of W chloride or oxychloride, at a temperature of from 15 to 200°C, advantageously from 50 to 150°C,
. Ti being collected in the condensate, in the form of Ti chloride, at a temperature of from -50 to 50°C, advantageously from -40 to -20°C.

9. A process according to any of claims 1-7, for the collection, respectively, of Ni and Mo, from a material, notably a Ni and Mo-based used catalyst , characterized in that the chloration takes place with a chloration mixture according to any of claims 1-7, at a temperature from between 250 to 650°C, preferably from between 400 to 550°C,
. wherein Mo is collected from the condensate, in the form of Mo chloride, at a temperature of from 20 to 200°C, advantageously from 50 to 150°C,
. Ni being collected by lixiviation of the chloration residue, in the form of Ni chloride, at a temperature of from 20 to 100°C, advantageously from 30 to 80°C.

10. A process according to any of claims 1-7, for the collection, respectively, of Co and Mo, from a material, notably a Co and Mo-based used catalyst , characterized in that the chloration takes place with a chloration mixture according to any of claims 1-8, at a temperature from between 250 to 650°C, preferably from between 400 to 550°C,
. wherein Mo is collected from the condensate, in the form of Mo chloride and/or oxychloride, at a temperature of from 20 to 200°C, advantageously from 50 to 150°C,
. Co being collected by lixiviation of the chloration residue, in the form of Co chloride, at a temperature of from 20 to 100°C, advantageously from 30 to 80°C.

11. A process according to any of claims 1-7, for the collection, respectively, of Co and W, from a material, notably a Co and W-based used catalyst , characterized in that the chloration takes place with a chloration mixture according to any of claims 1-8, at a temperature from between 250 to 650°C, preferably from between 350 to 550°C,
. wherein W is collected from the condensate, in the form of W chloride and/or oxychloride, at a temperature of from 15 to 200°C, advantageously from 50 to 150°C,
. Co being collected by lixiviation, in the form of Co chloride, at a temperature of from 20 to 100°C, advantageously from 30 to 80°C.

12. A process according to any of claims 1-7, for the collection, respectively, of W and Ni, from a material, notably a W and Ni-based used catalyst , characterized in that the chloration takes place with a chloration mixture according to any of claims 1-7, at a temperature from between 250 to 650°C, preferably from between 350 to 550°C,
. wherein W is collected from the condensate, in the form of W chloride and/or oxychloride, at a temperature of from 15 to 200°C, advantageously from 50 to 150°C,
. Ni being collected by lixiviation of the chloration residue, in the form of Ni chloride, at a temperature of from 20 to 100°C, advantageously from 30 to 80°C.

13. A process according to any of claims 1-7, for the collection, respectively, of V and Fe, from a material, notably a V-based used catalyst , characterized in that the chloration takes place with a chloration mixture according to any of claims 1-6, at a temperature from between 250 to 650°C, preferably from between 350 to 550°C,
. wherein V is collected from the condensate, in the form of V chloride and/or oxychloride, at a temperature of from -80 to 150°C, advantageously from - 40 to 20°C,
. Fe being collected according to the composition of the gaseous mixture, in the residue in the form of Fe oxide, or in the condensate in the form of Fe chloride and/or oxychloride,at a temperature of from 20 to 200°C, advantageously from 50 to 150°C.

14. A process according to any of claims 1-7, for the collection, respectively, of V and Ni, from a material, notably a V and Ni-based used catalyst , characterized in that the chloration takes place with a chloration mixture according to any of claims 1-7, at a temperature from between 250 to 650°C, preferably from between 350 to 550°C,
. wherein V is collected from the condensate, in the form of V chloride and/or oxychloride, at a temperature of from -80 to 150°C, advantageously from - 40 to 20°C,
. Ni being collected in the residue, in the form of Ni chloride, at a temperature of from 20 to 100°C, advantageously from 30 to 80°C.

15. A process according to any of claims 1-7, for the collection, respectively, of Co, Ni and Mo, from a material, notably a Co, Ni and Mo-based used catalyst , characterized in that the chloration takes place with a chloration mixture according to any of claims 1-8, at a temperature from between 250 to 650°C, preferably from between 400 to 550°C,
. wherein Mo is collected from the condensate, in the form of Mo chloride and/or oxychloride, at a temperature of from 20 to 200°C, advantageously from 50 to 150°C,
. Co and Ni being collected by lixiviation of the chloration residue, in the form of Co and Ni chlorides, at a temperature of from 20 to 100°C, advantageously from 30 to 80°C, these chlorides being later separated with conventional methods.

16. A process according to any of claims 1-7, for the collection, respectively, of Co, Ni and W, from a material, notably a Co, Ni and W-based used catalyst , characterized in that the chloration takes place with a chloration mixture according to any of claims 1-8, at a temperature from between 250 to 650°C, preferably from between 350 to 550°C,
. wherein W is collected from the condensate, in the form of W chloride and/or oxychloride, at a temperature of from 15 to 200°C, advantageously from 50 to 150°C,
. Co and Ni being collected by lixiviation of the chloration residue, in the form of Co and Ni chlorides, at a temperature of from 20 to 100°C, advantageously from 30 to 80°C, these chlorides being later separated with conventional methods.

17. A process according to any of claims 1-7, for the collection, respectively, of Co, Ni, W and V, from a material, notably a Co, Ni and W-based used catalyst , characterized in that the chloration takes place with a chloration mixture according to any of claims 1-7, at a temperature from between 250 to 650°C, preferably from between 350 to 550°C,
. wherein W is collected from the condensate, in the form of W chloride and/or oxychloride, at a temperature of from 15 to 200°C, advantageously from 50 to 150°C,
. V being collected in the condensate, in the form of V chlorides and/or oxychlorides, at a temperature of from -80 to 150°C, advantageously from -40 to -20°C.
. Co and Ni being collected by lixiviation of the chloration residue, in the form of Co and Ni chlorides, at a temperature of from 20 to 100°C, advantageously from 30 to 80°C, these chlorides being later separated with conventional methods.

18. A process according to any of claims 1-7, for the collection, respectively, of Co, Ni, Mo and V, from a material, notably a Co, Ni and Mo-based used catalyst , characterized in that the chloration takes place with a chloration mixture according to any of claims 1-8, at a temperature from between 250 to 650°C, preferably from between 400 to 550°C,
. wherein Mo is collected from the condensate, in the form of Mo chloride and/or oxychloride, at a temperature of from 20 to 200°C, advantageously from 50 to 150°C,
. V being collected in the condensate, in the form of V chloride and/or oxychloride, at a temperature of from -80 to 150°C, advantageously from -40 to -20°C.
. Co and Ni being collected by lixiviation of the chloration residue, in the form of Co and Ni chlorides, at a temperature of from 20 to 100°C, advantageously from 30 to 80°C, these chlorides being later separated with conventional methods.
